# EUROPÄISCHE PATENTSCHRIFT

(11) **EP 0 523 260 B1**
(45) Veröffentlichungstag und Bekanntmachung des Hinweises auf die Patenterteilung: **22.02.1995**
(21) Anmeldenummer: 91111714.1
(22) Anmeldetag: 13.07.1991
(51) Int. Cl.: B23D 61/02, B23D 1/12, B23D 59/02, B23D 65/00, B24D 5/04, B24D 18/00

(54) **Stammblatt aus faserverstärktem Kunststoff für Kreissägeblätter und/oder Trennschleifscheiben**
Blade body of fibre reinforced plastic for circular saw blades or abrasive cutting wheels
Corps de plastique renforcé de fibres pour lames de scie circulaires ou meules tronçonneuses

(43) Veröffentlichungstag der Anmeldung: 20.01.1993
(73) Patentinhaber: Mummenhoff, Heinrich, D-42855 Remscheid (DE)
(72) Erfinder: Mummenhoff, Heinrich, D-42855 Remscheid (DE)
(74) Vertreter: Zapf, Christoph, Dipl.-Ing.

(56) Entgegenhaltungen:
- DE-A- 2 045 814
- DE-A- 2 740 891
- DE-U- 8 811 470

## Beschreibung

Die vorliegende Erfindung betrifft ein Stammblatt für Kreissägeblätter und/oder Trennschleifscheiben, bestehend aus einem kreisförmigen Scheibenkörper, der seinerseits zumindest teilweise aus einem mit Fasern verstärkten Kunststoffmaterial besteht, wobei der durchschnittliche Faseranteil im Kunststoffmaterial zumindest 30 bis 70% beträgt.

Die Erfindung betrifft ferner auch ein Verfahren sowie eine Vorrichtung zum Herstellen des Stammblattes.

Derartige Stammblätter werden insbesondere für zur Steinbearbeitung vorgesehene Kreissägeblätter bzw. Trennschleifscheiben verwendet, wobei am Außenumfang des Stammblattes periphere, zumeist diamantbestückte Schneidelemente (Schneidsegmente) befestigt werden. Für bestimmte Anwendungsfälle werden sehr große Stammblätter mit einem Blatt-Durchmesser von bis zu 5,00 m benötigt. Damit nun bei derart großen Blatt-Durchmessern das Gewicht des Stammblattes nicht zu hoch wird, sind bereits Versuche unternommen worden, die Scheibenkörper aus Kunststoff, insbesondere einem glasfaserverstärkten Kunststoff oder aber einem anderen Verbundwerkstoff, herzustellen. Dabei traten jedoch erhebliche Probleme dahingehend auf, daß derartige Kunststoff-Stammblätter sehr instabil bzw. labil sind und sich im Betrieb bei laufbedingter Kräftebeaufschlagung und durch Erwärmung aufgrund von Materialspannungen verwinden. Dies führt zu schlechten Laufeigenschaften und auch zu einer schlechten Bearbeitungsqualität während der Anwendung der Sägeblätter. In ungünstigen Fällen können die auftretenden Verwindungen sogar zur ZerStörung des Blattes und/oder zu Beschädigungen des jeweiligen Werkstückes führen. Diese Probleme konnten bislang noch nicht zufriedenstellend gelöst werden, so daß sich Kunststoff-Stammblätter noch nicht für alle Anwendungsfälle durchsetzen konnten.

Aus dem Dokument EP-A-0 356 923 ist ein Stammblatt bzw. eine "Säge" der gattungsgemäßen Art bekannt, wobei aber dort der relativ hohe Faseranteil dadurch erreicht wird, daß die Faserstoffe in der Form gewebeartiger Matten im Sägeblatt angeordnet sind. Die Verwendung von derartigen Fasermatten führt nun aber wegen der festgelegten, zueinander senkrechten, sich kreuzenden Anordnung der Einzelfasern zwangsläufig dazu, daß das Stammblatt bzw. das Sägeblatt über seinen Umfang hinweg sich ändernde mechanische Eigenschaften besitzt. Dieser grundsätzliche Nachteil ist in diesem Dokument auch sogar angesprochen; er soll dort dadurch beseitigt werden, daß die Fasermatten in der Form von Kreissektoren ausgebildet sind, die rotationssymmetrisch angeordnet sind und sich an ihren Randabschnitten gegenseitig überlappen. Allerdings liegen auch dabei über den Umfang hinweg unterschiedliche Eigenschaften vor, denn die als nachteilig beschriebene, zueinander rechtwinklige Anordnung der sich kreuzenden Einzelfasern wird innerhalb der einzelnen Kreissektoren weiterhin beibehalten. Zudem führt die radiale Überlappung jeweils zweier kreissektorförmiger Fasermatten ebenfalls zu einer anderen Steifigkeit als im jeweils dazwischenliegenden Umfangsbereich einer Fasermatte. Dies führt dann insgesamt zu einer ungleichmäßigen, für die Lauf- und Gebrauchseigenschaften eines Sägeblattes ungünstigen "Stabilitätsverteilung".

Die DE-A-2 045 814 beschreibt ein "mit Bor zusammengesetztes Schneidwerkzeug", wobei Borfäden so in ein Kunststoffmaterial eingebettet sind, daß sie am Außenumfang des Sägeblattes austreten bzw. münden und so dessen Schneid- bzw. Schleifbelag bilden. Die Borfäden dienen hier folglich nicht oder zumindest nicht hauptsächlich zur Verstärkung (Armierung) des Blattes, denn sie sind teilweise sogar in einer kleingehackten Form nur im äußeren Umfangsbereich - dort eine "Schneidkante" bildend - angeordnet.

Die DE-A-2 740 891 beschreibt ein Sägeblatt (bzw. eine Trennscheibe), wobei aber ebenfalls der Nachteil von ungleichmäßigen Stabilitätseigenschaften auftritt. Denn dieses Sägeblatt besteht aus einer inneren Habe und einem Außenring, wobei die Habe mit dem Außenring über einzelne radiale Fasern, Fäden oder Drähte verbunden ist. Es ergibt sich somit ein Grundaufbau ähnlich dem eines Speichenrades. Dabei soll durch Einstellung der Spannung der einzelnen "Zugeinrichtungen" eine Zentrierung erfolgen Im übrigen besteht das bekannte Sägeblatt aus einer Kunststoffschicht, in die die "Zugeinrichtungen", insbesondere Stahldrähte, eingebettet sind, und die mit einer üblichen Faserarmierung in Form von Gewebematten verstärkt ist.

Der vorliegenden Erfindung liegt die Aufgabe zugrunde, die geschilderten Probleme zu beseitigen und ein gattungsgemäßes Stammblatt zu schaffen, welches unter praktisch allen Betriebsbedingungen optimale Laufeigenschaften und Bearbeitungsergebnisse gewährleistet, und welches auch eine lange Lebensdauer besitzt.

Ferner sollen auch ein Verfahren und eine Vorrichtung zum Herstellen des erfindungsgemäßen Stammblattes bereitgestellt werden.

Erfindungsgemäß wird dies durch die Merkmale des Anspruchs 1 bzw. des Anspruchs 29 bzw. des Anspruchs 40 erreicht. Vorteilhafte Weiterbildungen der Erfindung sind in den jeweils hiervon abhängigen Unteransprüchen enthalten.

Das erfindungsgemäße Stammblatt zeichnet sich somit dadurch aus, daß die Fasern - bezogen auf die Kreisform des Scheibenkörpers - zumindest in einer derart wenigstens annähernd radialen Orientierung und in einer derart über den Umfang des Scheibenkörpers gleichmäßigen und dichten Verteilung in dem Kunststoffmaterial eingebettet angeordnet sind, daß das erfindungsgemäße Stammblatt in allen radialen Richtungen gleiche mechanische Eigenschaften besitzt, so daß es praktisch als "radial-isotrop" bezeichnet werden kann. Das Stammblatt zeichnet sich durch optimale Laufeigenschaften unter nahezu allen Betriebsbedingungen, durch ein niedriges Gewicht und durch eine lange Standzeit (Haltbarkeit) aus. Dabei könnten - zusätzlich zu den im wesentlichen radialen Fasern - grundsätzlich auch noch weitere Fasern in Umfangsrichtung oder längs von Sekanten verlaufend angeordnet sein, jedoch hat sich herausgestellt, daß allein mit den zumindest annähernd radialen Fasern für die meisten Anwendungsfälle bereits optimale Eigenschaften erreicht werden können.

Grundsätzlich könnte ein beliebiges Fasermaterial verwendet werden, so z.B. auch Glasfasern. Es hat sich aber als besonders vorteilhaft erwiesen, ein Kohlefasermaterial einzusetzen, wobei im Vergleich zu hochfesten (HT) Kohlefasern die sogenannten "hochsteifen" (HM) Kohlefasern am besten geeignet sind, da hiermit - wie Versuche ergeben haben - bei einem Faseranteil von ca. 65 Vol.-% das entsprechende Kunststoffmaterial (Kurzbezeichnung HM-CFK) einen Elastizitätsmodul von ca. 260.000 N/mm² (in Faserrichtung) erreichen kann. Im Vergleich damit hat Stahl einen E-Modul von lediglich 210.000 N/mm². Dies bedeutet, daß die elastischen Eigenschaften des erfindungsgemäßen Stammblattes sogar besser sind als diejenigen eines Stammblattes aus Stahl.

Durch die zumindest hauptsächlich radiale Orientierung der Fasern weist das Kunststoffmaterial des Scheibenkörpers - geometrisch bedingt - einen in radialer Richtung von innen nach außen abnehmenden Faseranteil auf, was sich aber überraschenderweise sogar vorteilhaft auf die mechanischen Eigenschaften auswirkt. Der durchschnittliche Faseranteil beträgt dabei 30 bis 80 Vol.-%, insbesondere etwa 60 bis 65 Vol.-%.

Es ist ferner besonders vorteilhaft, wenn die Fasern stramm, d.h. unter einer bestimmten, zumindest geringen, für alle Fasern gleichen Zugspannung stehend in dem Kunststoffmaterial eingebettet sind. Hierdurch können die Fasern in optimaler Weise eine Stützkraft auf das Kunststoffmaterial ausüben. Hierbei ist es wesentlich, daß ein guter, stoffschlüssiger Verbund zwischen den Fasern und dem Kunststoff gewährleistet ist. Dies wird insbesondere mit einem Kunststoff auf der Basis eines niedrig viskosen Kunstharzes erreicht, da beim Mischen eines derartigen Harzes mit dem erforderlichen Härter Lufteinschlüsse nahezu vollständig vermieden werden können, so daß hierdurch sowie aufgrund der niedrigen Viskosität eine optimale Benetzung der Fasern mit dem Kunststoff gewährleistet werden kann.

Für die mechanischen Eigenschaften des erfindungsgemäßen Stammblattes ist es ferner vorteilhaft, wenn das Stammblatt aus zwei äußeren, die Fasern enthaltenden Faser-Schichten und einer mittig dazwischenliegenden, mit dem Kunststoffmaterial zumindest stoffschlüssig verbundenen Mittenschicht besteht. Vorzugsweise sind hierbei in jeder Faser-Schicht mehrere Faser-Lagen in zur Scheibenebene des Stammblattes senkrechter Richtung übereinanderliegend angeordnet. Hierdurch wird der oben erwähnte Faseranteil erreicht, wobei die Fasern "dicht an dicht" aneinanderliegen. Die Mittenschicht besteht vorzugsweise aus einem faserlosen Kunststoff, kann aber auch aus Metall oder einem anderen geeigneten Material bestehen.

Um an dem erfindungsgemäßen Kunststoff-Stammblatt auf besonders einfache Weise die umfänglichen Schneidsegmente,die für einige Anwendungsfälle gelötet werden sollten, befestigen zu können, besitzt der Scheibenkörper einen Segmentträgerring, der mit einem Verbindungsabschnitt stoff- und/oder formschlüssig mit dem Kunststoffmaterial verbunden, insbesondere eingebettet ist und sich mit einem Halteabschnitt über den Außenumfang des Scheibenkörpers radial hinaus erstreckt. An diesem Halteabschnitt sind dann mit den Schneidsegmenten verbundene Schneidsegmenthalterungen befestigbar. Hierdurch können die Schneidsegmente nach wie vor aufgelötet werden, und zwar auf die Schneidsegmenthalterungen, die ihrerseits auf beliebige Weise, z.B. durch Kleben oder mittels Schraub- oder Nietverbindungen, mit dem Segmentträgerring verbunden werden können. Mehrere alternative Ausführungsbeispiele hierfür werden in der nachfolgenden Figurenbeschreibung noch näher erläutert werden.

Das Verfahren zum Herstellen des erfindungsgemäßen Stammblattes zeichnet sich dadurch aus, daß zunächst Fasern in einer - bezogen auf die Kreisform des Stammblattes - zumindest annähernd radialen Ausrichtung und in einer über den Umfang gleichmäßigen, schichtartigen Verteilung verlegt werden, und daß dann die Fasern unter Formgebung in ein Kunststoffmaterial eingebettet werden.

Eine Vorrichtung zum Herstellen eines Stammblattes gemäß der Erfindung besitzt ein Kunststoff-Preß- oder Spritzwerkzeug mit einer dem Stammblatt entsprechenden Form und ist dabei durch eine Vielzahl von über den Außenumfang des Werkzeuges verteilt angeordneten Fixierstiften gekennzeichnet. Diese Fixierstifte dienen dazu, die Fasern in der erfindungsgemäßen Weise zu verlegen, indem diese um die Fixierstifte derart gewickelt werden, daß sie eine zumindest annähernd radiale Orientierung erhalten. Dabei können ausschließlich umfängliche Fixierstifte vorgesehen sein, zwischen denen die Fasern jeweils zumindest annähernd diagonal verlaufend fixiert werden, oder aber es kann mindestens ein zusätzlicher, im inneren Bereich angeordneter Fixierstift vorgesehen sein, wobei dann die Fasern jeweils zwischen den äußeren Fixierstiften und dem (den) inneren Fixierstift(en) zumindest annähernd radial verlaufend gewickelt werden. Die nachfolgende Figurenbeschreibung enthält einige konkrete Beispiele für bestimmte Wickeltechniken bzw. Fixierstift-Anordnungen.

Anhand der Zeichnung soll im folgenden die Erfindung beispielhaft näher erläutert werden. Dabei zeigen
- Fig. 1: eine Draufsicht eines erfindungsgemäßen Stammblattes,
- Fig. 2: einen gegenüber Fig. 1 geringfügig vergrößerten Querschnitt des Stammblattes längs der Linie II-II in Fig. 1,
- Fig. 3: einen Schnitt längs der durch zwei verschiedene Ebenen verlaufenden Linie III-III in Fig. 2 in einem etwa dem Maßstab der Fig. 1 entsprechenden Maßstab,
- Fig. 4 bis 7: vergrößerte Schnittdarstellungen des äußeren Umfangsbereichs des Stammblattes, d.h. des Bereichs A in Fig. 2, in hinsichtlich des Segmentträgerringes alternativen Ausgestaltungen und unter zusätzlicher Darstellung von Schneidsegmenthalterungen,
- Fig. 8: eine Draufsicht eines Teils eines Segmentträgerringes in einer vorteilhaften Ausgestaltung,
- Fig. 9: eine Draufsicht einer weiteren Ausführungsform eines erfindungsgemäßen Stammblattes,
- Fig. 10: einen Querschnitt des Stammblattes längs der Linie X - X in Fig. 9,
- Fig. 11 bis 14: Querschnitte durch den inneren Bereich des Stammblattes in unterschiedlichen Ausgestaltungen des Montageflansches zusammen mit Aufspannvorrichtungen mit Kühlmittelzuführung,
- Fig. 15 bis 19: jeweils stark vereinfachte, schematische Draufsichten einer erfindungsgemäßen Vorrichtung zum Herstellen des Stammblattes zur Erläuterung des erfindungsgemäßen Herstellungsverfahrens, d.h. insbesondere vonverschiedenen Faser-Wickeltechniken, und
- Fig. 20: einen vergrößerten Halb-Radialschnitt des Stammblattes zur Erläuterung des erfindungsgemäßen Herstellungsverfahrens.

In den verschiedenen Figuren der Zeichnung sind gleiche und gleichwirkende Teile und Komponenten stets mit den gleichen Bezugsziffern bezeichnet und werden daher in der Regel auch jeweils nur einmal beschrieben.

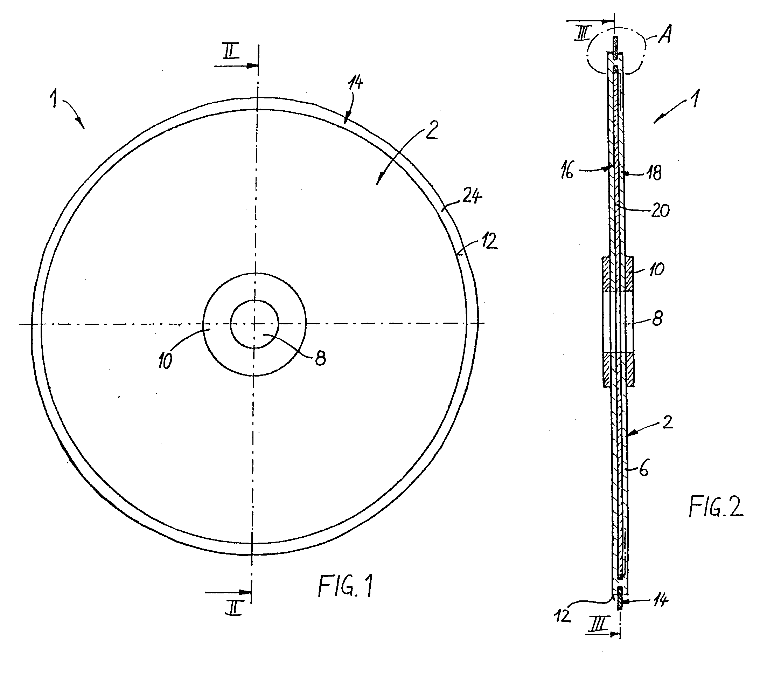

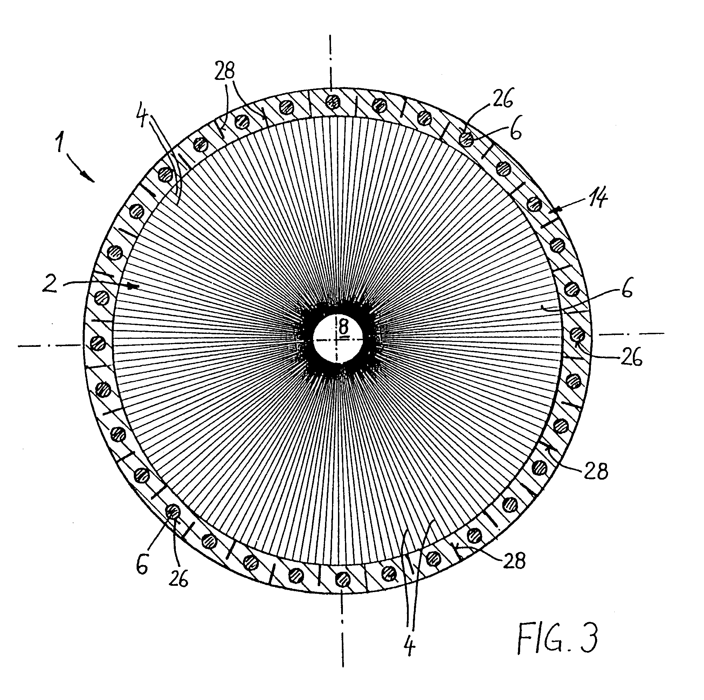

Wie sich zunächst aus Fig. 1 bis 3 ergibt, besteht ein erfindungsgemäßes Kreissäge-Stammblatt 1 aus einem kreisförmimigen Scheibenkörper 2, der hauptsächlich aus einem mit Fasern 4 (Fig. 3) verstärkten Kunststoffmaterial 6 (Fig. 2) hergestellt ist. In seinem inneren Flächenbereich besitzt der Scheibenkörper 2 eine zentrische Montageöffnung 8 und vorzugsweise einen diese umschließenden, verdickten, in dieser Ausführungsform einstückig angeformten, d.h. ebenfalls aus dem Kunststoffmaterial 6 bestehenden Montageflansch 10. Am Außenumfang 12 des Scheibenkörpers 2 sind nicht dargestellte Schneidsegmente befestigbar, wozu der Scheibenkörper 2 zweckmäßigerweise mit einem Segmentträgerring 14 verbunden ist, der weiter unten unter Bezugnahme auf die Fig. 3 bis 8 noch näher erläutert werden wird.

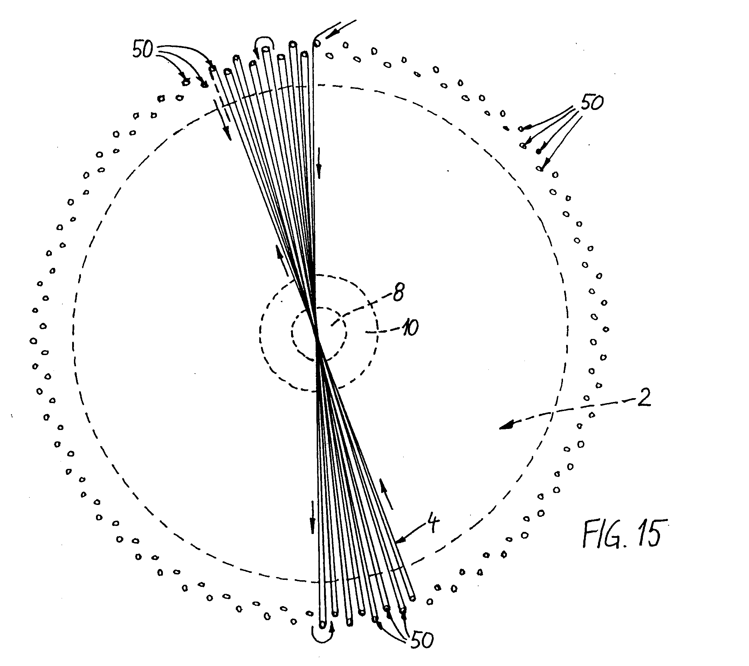

Wie sich nun insbesondere aus der schematischen Darstellung in Fig. 3 ergibt, ist erfindungsgemäß vorgesehen, daß die Fasern 4 - bezogen auf die Kreisform des Scheibenkörpers 2 - zumindest in einer wenigstens annähernd radialen Orientierung und in einer über den Umfang des Scheibenkörpers 2 gleichmäßigen Verteilung in dem Kunststoffmaterial 6 eingebettet angeordnet sind. Der Ausdruck "wenigstens annähernd radial" ist hierbei so zu verstehen, daß die Fasern 4 auch auf außermittig verlaufenden Sekanten angeordnet sein könnten, wobei aber diese Sekanten möglichst nah an dem Mittelpunkt des Stammblattes 1 vorbei, zumindest durch den Bereich des Flansches 10, verlaufen sollten ("quasi-radialer" Verlauf; vergleiche hierzu auch die Fig. 15 bis 20). Hierbei könnten zusätzlich zu diesen "quasi-radialen" Fasern 4 noch zusätzliche Fasern in Umfangsrichtung oder längs von weiter von dem Mittelpunkt entfernten (außerhalb des Flanschbereichs liegenden) Sekanten verlaufend vorgesehen sein (nicht dargestellt). Es ist zudem darauf hinzuweisen, daß die Fasern 4 tatsächlich sehr viel "dichter" angeordnet sind, als es zeichnerisch in Fig.3 dargestellt werden konnte, weshalb die Fig. 3 nur als eine sehr schematische Darstellung der Faser-Orientierung zu verstehen ist. Es ist allerdings sehr gut zu erkennen, daß die "Dichtigkeit" der Fasern 4, d.h. der Faseranteil im Kunststoffmaterial 6, in radialer Richtung von innen nach außen abnimmt. Dabei beträgt der durchschnittliche Faseranteil erfindungsgemäß 30 bis 80 Vol.-%, insbesondere etwa 60 bis 65 Vol.-%. Die Fasern sind stramm, d.h. unter einer zumindest geringen Zugspannung stehend, in dem Kunststoffmaterial 6 eingebettet und bestehen vorzugsweise aus einem hochsteifen Kohlefasermaterial (sog. HM Kohlefasern), so daß sich ein "HM-CFK" ergibt. Als Kunststoffmaterial 6 wird vorzugsweise ein selbsthärtender Mehrkomponenten-Werkstoff auf der Basis eines niedrig viskosen Kunstharzes verwendet.

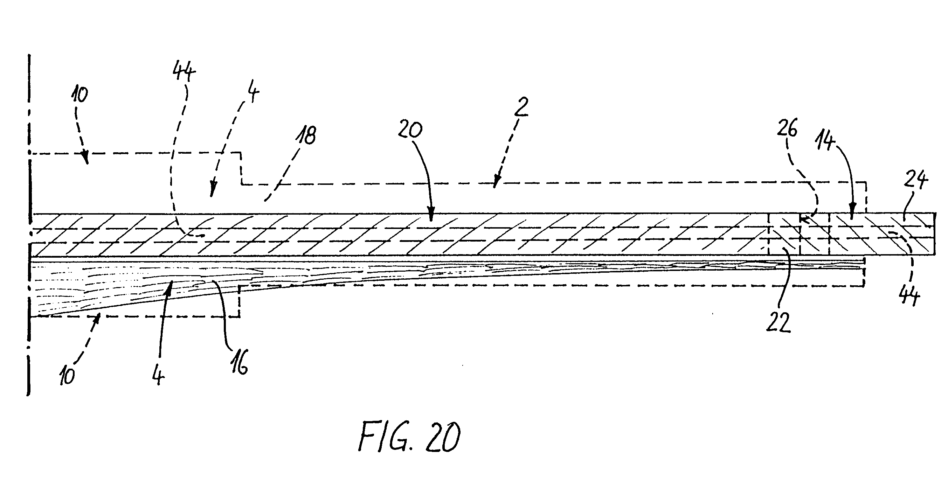

Wie sich insbesondere aus Fig. 2, 4 bis 7 und 20 jeweils ergibt, sind die Fasern 4 erfindungsgemäß in zwei Schichten 16 und 18 beidseitig einer mittig dazwischenliegenden Mittenschicht 20 angeordnet. Der Einfachheit halber sind die Fasern 4 in den Fig. 2 und 4 bis 7 nicht dargestellt. Die Mittenschicht 20 ist mit dem Kunststoffmaterial 6 zumindest stoffschlüssig, gegebenenfalls auch formschlüssig, verbunden. Für einen Formschluß kann die Mittenschicht 20 nicht dargestellte Durchgangsöffnungen besitzen, die dann von dem Kunststoffmaterial durchdrungen sind (sog. "Durchverbindungen"). Vorzugsweise sind innerhalb jeder Faser-Schicht 16, 18 mehrere Faser-Lagen in zur Scheibenebene senkrechter Richtung übereinander liegend angeordnet. Dies ist insbesondere in Fig. 20 schematisch angedeutet.

Durch die bisher beschriebene, erfindungsgemäße Ausgestaltung besitzt das Stammblatt 1 bei extrem leichtem Gewicht und guter Haltbarkeit sehr gute mechanische Eigenschaften, die vorteilhafterweise in allen radialen Richtungen gleich sind ("radial-isotrop"). Dabei besitzt das erfindungsgemäße Stammblatt in Faserrichtung einen bemerkenswerten Elastizitätsmodul von ca. 260.000 N/mm².

Anhand der Fig. 2 bis 8 sowie der Fig. 20 soll im folgenden der oben bereits erwähnte Segmentträgerring 14 näher erläutert werden. Dieser Segmentträgerring 14 besitzt einen inneren Verbindungsabschnitt 22, der stoff- und/oder formschlüssig mit dem Kunststoffmaterial 6 des Scheibenkörpers 2 verbunden ist. Insbesondere besitzt der Verbindungsabschnitt 22 eine geringere Dicke als der Scheibenkörper 2 und ist in das Kunststoffmaterial 6 stoffschlüssig eingebettet. Der Segmentträgerring 14 besitzt zudem einen sich über den Außenumfang 12 des Scheibenkörpers 2 radial hinaus erstreckenden Halteabschnitt 24. Der Segmentträgerring 14 kann zweckmäßigerweise als Kreisscheibenring ausgebildet sein, dessen innerer Umfangsbereich den Verbindungsabschnitt 22 bildet, der die Mittenschicht 20 umfänglich umschließend in das Kunststoffmaterial 6 des Scheibenkörpers 2 eingebettet ist. Dabei besitzt der Verbindungsabschnitt 22 vorzugsweise Durchgangsöffnungen 26, die von dem Kunststoffmaterial 6 durchdrungen werden (s. insbesondere Fig. 3 bis 7), so daß vorteilhafterweise ein Stoff- und Formschluß zwischen dem Segmentträgerring 14 und dem Scheibenkörper 2 besteht. Wie weiterhin in Fig. 3 erkennbar ist, weist der als Kreisscheibenring ausgebildete Segmentträgerring 14 zweckmäßigerweise über den Umfang verteilt angeordnete, radiale, jeweils in eine radiale Richtung randoffene Dehnungsschlitze 28 auf, wobei vorzugsweise in Umfangsrichtung jeweils abwechselnd ein nach innen und ein nach außen randoffener Dehnungsschlitz 28 einander benachbart angeordnet sind. Diese Dehnungsschlitze 28 liegen jeweils zwischen den von dem Kunststoffmaterial 6 durchdrungenen Durchgangsöffnungen ("Durchverbindungen") 26.

Alternativ zu dieser Ausgestaltung des Segmentträgerrings als Kreisscheibenring ist es ebenfalls möglich, als Mittenschicht 20 einen kreisscheibenförmigen Füllkörper zu verwenden, der einen derart großen Durchmesser besitzt, daß er mit seinem äußeren Umfangsbereich den Außenumfang 12 des Scheibenkörpers 2 nach außen überragt. Dies bedeutet, daß der Segmentträgerring 14 vom äußeren Umfangsbereich dieses die Mittenschicht 20 bildenden Füllkörpers gebildet ist. Diese Ausführungsform ist in Fig. 20 angedeutet.

Der Segmentträgerring 14 besteht vorzugsweise aus Metall, wobei in der mit der Mittenschicht 20 einstückigen Ausgestaltung natürlich die gesamte Mittenschicht 20 bzw. der diese bildende Füllkörper aus Metall besteht.

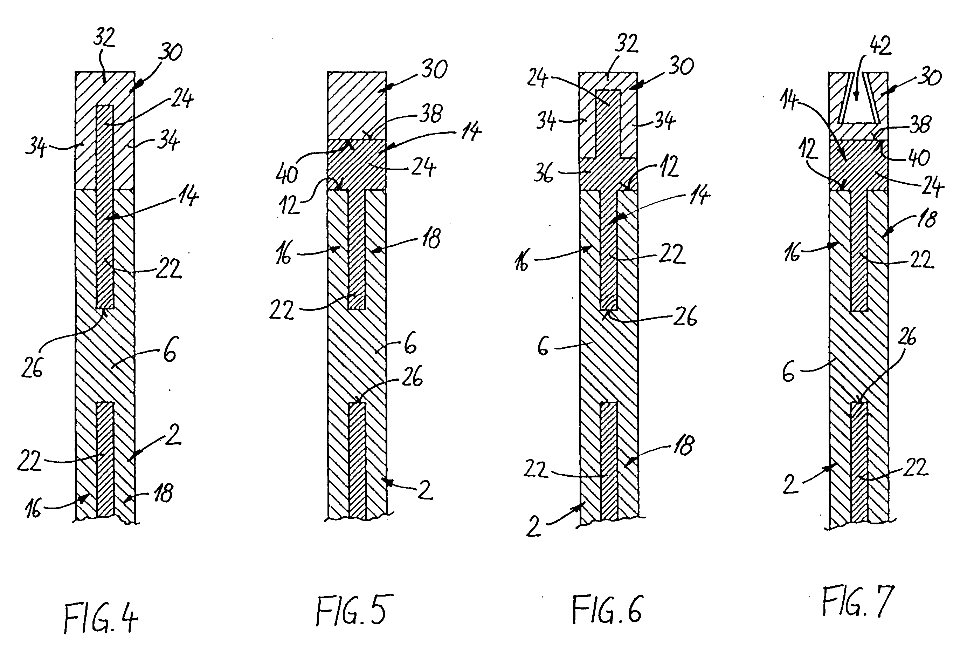

Gemäß Fig. 4 bis 7 sind an dem Segmentträgerring 14. d.h. an dessen Halteabschnitt 24, umfänglich verteilt angeordnete Schneidsegmenthalterungen 30 befestigt bzw. befestigbar. Hierfür gibt es die folgenden unterschiedlichen Möglichkeiten.

Gemäß Fig. 4 und 6 besitzt der äußere Halteabschnitt 24 des Segmentträgerringes 14 eine geringere Dicke als der Scheibenkörper 2. Die Schneidsegmenthalterungen 30 besitzen hierbei jeweils einen im wesentlichen U-förmigen Querschnitt mit einem Quersteg 32 und zwei parallelen, den Halteabschnitt 24 des Segmentträgerringes 14 beidseitig übergreifenden Schenkeln 34. Diese Schneidsegmenthalterungen 30 können mit dem Segmentträgerring 14 verklebt und/oder über im Bereich der den Halteabschnitt 24 übergreifenden Schenkel 34 angeordnete Schraub- oder Nietverbindungen (nicht dargestellt) gehaltert sein. Gemäß Fig. 4 schließt sich der Halteabschnitt 24 unmittelbar an den eingebetteten Verbindungsabschnitt 22 an, während bei der Ausführung nach Fig. 6 zwischen dem Verbindungsabschnitt 22 und dem Halteabschnitt 24 ein im wesentlichen die gleiche Dicke wie der Scheibenkörper 2 aufweisender, den Außenumfang 12 des Scheibenkörpers 2 unmittelbar umschließender Ringabschnitt 36 angeordnet ist.

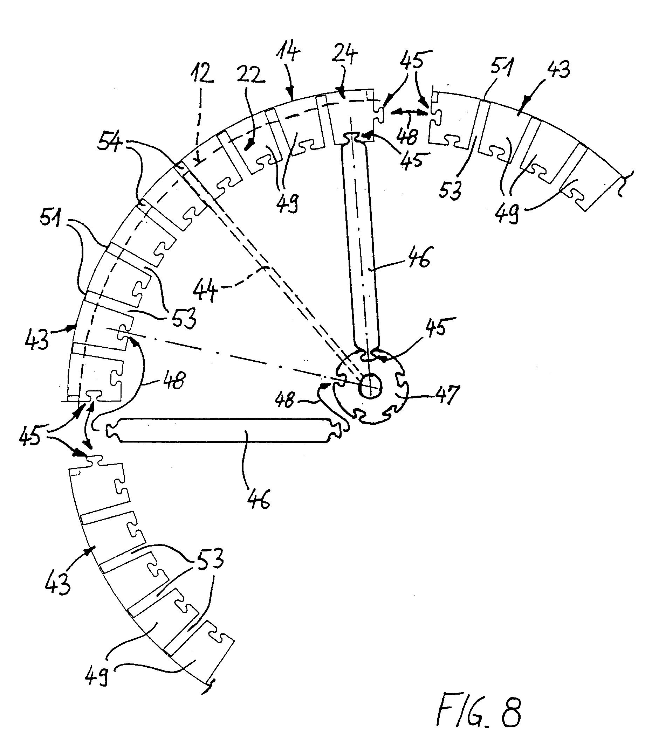

Bei den Ausführungen nach Fig. 5 und 7 besitzt der sich unmittelbar an den eingebetteten Verbindungsabschnitt 22 anschließende Halteabschnitt 24 des Segmentträgerrings 14 im wesentlichen die gleiche Dicke wie der Scheibenkörper 2. Somit besitzt hier der Segmentträgerring 14 einen etwa T-förmigen Querschnitt. Die radial nach außen weisende Oberfläche des Halteabschnittes 24 bildet eine in Umfangsrichtung kreisbogenförmig konvex gekrümmte Befestigungsfläche 38, wobei die Schneidsegmenthalterungen 30 mit entsprechend konkav gekrümmten Befestigungsflächen 40 auf dieser Befestigungsfläche 38 des Segmentträgerringes 14 gehaltert, insbesondere aufgeklebt, sind. Bei der Ausführung nach Fig. 7 weisen die Schneidsegmenthalterungen 30 zudem jeweils eine Schwalbenschwanz-Aufnahme 42 zur formschlüssigen Halterung der nicht dargestellten Schneidsegmente auf. Alternativ hierzu werden üblicherweise die Schneidsegmente auf die Schneidsegmenthalterungen 30 aufgelötet, bevor letztere mit dem Segmentträgerring 14 verbunden werden.

Gemäß Fig. 8 ist der Segmentträgerring 14 in mehrere einzelne, kreisbogenförmige Ringabschnitte 43 unterteilt, die insbesondere über Formschlußverbindungen 45 miteinander verbunden bzw. verbindbar sind. Die Formschlußverbindungen 45 sind vorzugsweise jeweils nach Art einer Schwalbenschwanzverbindung ausgebildet. Diese Ausführungsform des Segmentträgerrings 14 eignet sich besonders für Stammblätter mit sehr großem Durchmesser. Um den Segmentträgerring 14 bzw. dessen einzelne Ringabschnitte 43 während der Herstellung des erfindungsgemäßen Stammblattes genau ausrichten und positionieren zu können, ist der Segmentträgerring 14 über mehrere, umfänglich verteilt angeordnete, speichenartige, in der Ebene der Mittenschicht anzuordnende Verbinderelemente 46 mit einem zentrischen Fixierkörper 47 verbunden bzw. verbindbar, wobei auch für diese Verbindungen Formschlußverbindungen 45 zwischen den Verbinderelementen 46 und den Ringabschnitten 43 einerseits und dem Fixierkörper 47 andererseits vorgesehen sind. In Fig. 8 ist anhand von Pfeilen 48 der Vorgang des Zusammensetzens der genannten Einzelteile des Segmentträgerrings 14 veranschaulicht und dürfte hierdurch ohne weiteres verständlich sein. Wie weiterhin noch in Fig. 8 erkennbar ist, besteht jeder Ringabschnitt 43 aus mehreren Ringstücken 49, die im äußeren Umfangsbereich des Segmentträgerrings 14 über schmale Verbindungsstege 51 einstückig miteinander verbunden sind. Dies bedeutet, daß die Ringstücke 49 bis auf die Verbindungsstege 51 über radiale Schlitze bzw. Zwischenräume 53 getrennt sind, wobei dann dieser Segmentträgerring 14 derart mit dem Scheibenkörper 2 verbunden wird, daß die Verbindungsstege 51 vollständig außerhalb des Scheibenkörpers 2, d.h. mit radialem Abstand vom Außenumfang 12 (in Fig. 8 gestrichelt eingezeichnet) angeordnet sind, so daß zwischen dem Außenumfang 12 und den Verbindungsstegen 51 Öffnungen 54 gebildet sind. Der Zweck dieser Ausgestaltung wird weiter unten noch näher erläutert werden.

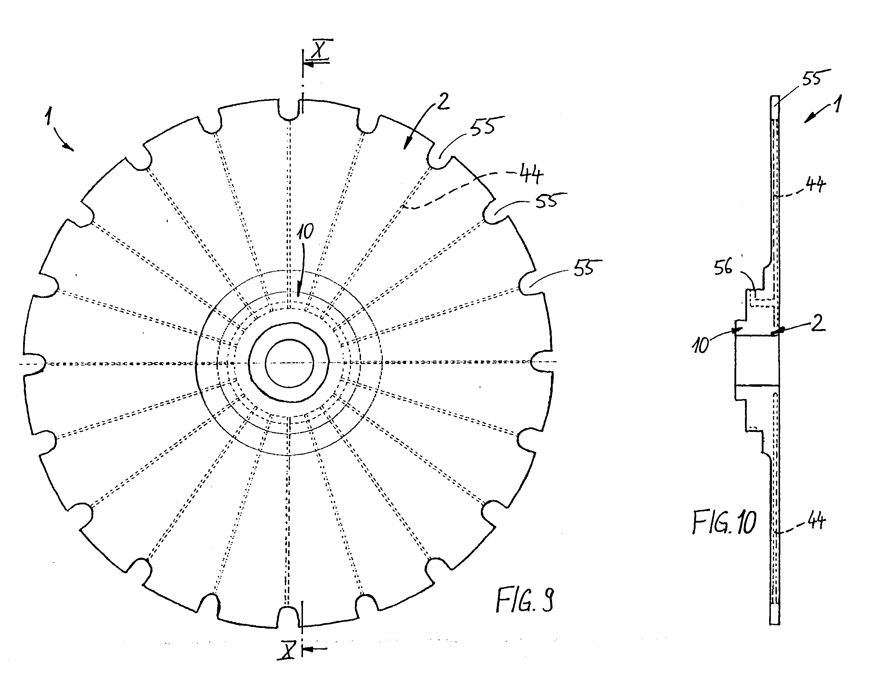

In einer in Fig. 9 bis 14 veranschaulichten sowie auch in Fig. 20 angedeuteten Weiterbildung der Erfindung weist der Scheibenkörper 2 durch den Bereich seiner Mittelebene verlaufende Kanäle 44 auf (in den Fig. 9, 10 und 20 lediglich mit gestrichelten Linien eingezeichnet). Diese Kanäle 44 verlaufen im wesentlichen radial vom inneren Bereich zum Außenumfang 12, und zwar insbesondere durch die Mittenschicht 20 und gegebenenfalls auch durch den Segmentträgerring 14. Die Kanäle 44 können zwei verschiedenen Zwecken dienen. Einerseits kann über eine Aufspannvorrichtung ein Kühlmedium zugeführt werden, welches dann über die Kanäle 44 zum äußeren Umfangsbereich strömt und zwischen den Schneidsegmenten austritt, um diese während eines Bearbeitungsvorganges zu kühlen. Andererseits können die Kanäle 44 auch jeweils beidseitig verschlossen und dabei mit einem Geräusch-Dämpfungsmedium gefüllt sein. Diese Möglichkeit dient zur effektiven Geräusch- bzw. Schwingungsdämpfung.

An dieser Stelle sei nochmals auf Fig. 8 hingewiesen, wo anhand eines der Kanäle 44 (gestrichelt eingezeichnet) dargestellt ist, daß dieser durch den Bereich eines der zwischen den Ringstücken 49 des Segmentträgerrings 14 gebildeten Schlitze bzw. Zwischenräume 53 verläuft und am Außenumfang 12 des Scheibenkörpers 2 nach außen im Bereich der zwischen dem Außenumfang 12 und dem jeweiligen Verbindungssteg 51 gebildeten Öffnung 54 mündet. Hierdurch kann ein vom zentrischen Bereich aus zugeführtes Kühlmedium über die Öffnung 54 zu Kühlzwecken austreten.

Gemäß Fig. 9 und 10 können am äußeren Umfang des Scheibenkörpers 2 radiale Segmentschlitze 55 gebildet sein, wobei dann die Schlitze 44 im Grundbereich dieser Segmentschlitze 55 nach außen münden. In Fig. 10 ist erkennbar, daß der Scheibenkörper 2 einstückig mit dem Flansch 10 ausgebildet ist, wobei sich die Schlitze 44 durch den Flansch 10 hindurch bis zumindestens einer Einspeisungsöffnung 56 erstrecken, in die über eine geeignete Aufspannvorrichtung 57 - wie im folgenden erläutert - ein Kühlmedium zugeführt werden kann.

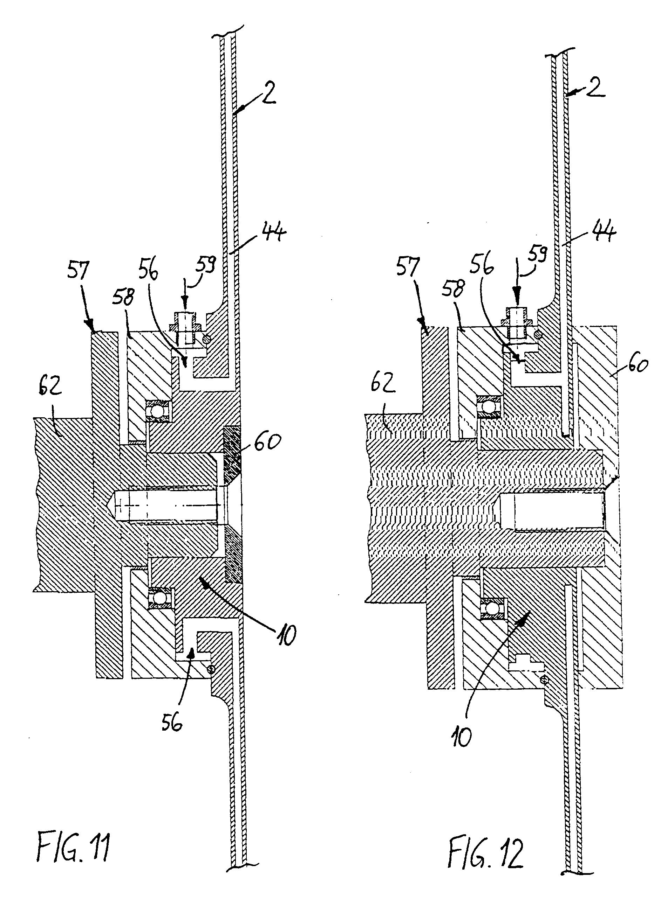

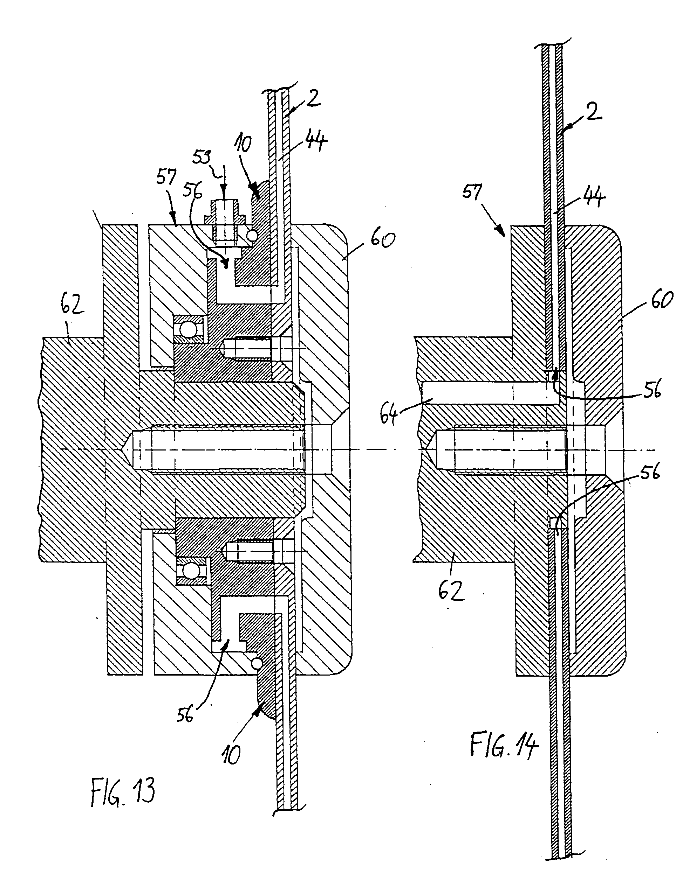

In den Fig. 11 bis 14 sind einige Beispiele für die Aufspannvorrichtung 57 dargestellt. In den Fig. 11 und 12 ist jeweils das Stammblatt 2 einstückig mit dem Flansch 10 ausgebildet. Die Kanäle 44 münden im Bereich des Flansches 10 über die Einspeisungsöffnung bzw. -öffnungen 56 in eine radiale Richtung nach außen, so daß über ein ortsfestes, d.h. nicht rotierendes Teil 58 der Aufspannvorrichtung 57 ein Kühlmedium in Radialrichtung (Pfeil 59) zugeführt werden kann. Dabei ist in an sich bekannter Weise eine Abdichtung zwischen den rotierenden und den nicht rotierenden Teilen vorgesehen. Die beiden Ausführungsformen der Fig. 11 und 12 unterscheiden sich lediglich in der Art eines zum Aufspannen des Stammblattes vorgesehenen Halteteils 60, wobei gemäß Fig. 11 das Halteteil 60 scheibenförmig ausgebildet ist und in eine Aufnahmevertiefung des Stammblattes eingreift. Demgegenüber liegt in der Ausführungsform nach Fig. 12 das Halteteil 60 außen auf der Oberfläche des Stammblattes auf. In beiden Fällen ist das Halteteil 60 über eine Schraubverbindung mit einer Antriebswelle 62 verbunden. In der Ausführung nach Fig. 13 ist der Flansch 10 als separates, mit dem Scheibenkörper 2 über Schraubverbindungen verbundenes Teil ausgebildet. Im übrigen entspricht diese Ausführung derjenigen der Fig. 12. Bei der Ausführung nach Fig. 14 besitzt der Scheibenkörper 2 keinen Flansch. Die Kanäle 44 enden in radialer Richtung nach innen im Bereich der Montageöffnung 8 und bilden hier radial nach innen weisende Einspeisungsöffnungen 56. Dieser Scheibenkörper 2 wird auf einen Wellenansatz der Antriebswelle 62 aufgesetzt und mit dem Halteteil 60 aufgespannt. Dabei besitzt der Wellenansatz eine umlaufende Ringausnehmung, in die einerseits die Einspeisungsöffnungen 56 sowie andererseits ein axialer Kanal 64 der Antriebswelle 62 münden.

In einer vorteilhaften, in den Zeichnungen nicht dargestellten Weiterbildung der Erfindung besitzt der Scheibenkörper 2 auf seinen beiden Oberflächen jeweils eine Verschleißschutz-Beschichtung, die vorteilhafterweise die im Bereich der Oberflächen liegenden Fasern vor mechanischen Einflüssen (Reibung) schützt. Das erfindungsgemäße Stammblatt besitzt hierdurch eine besonders lange Lebensdauer.

Anhand der Fig. 15 bis 20 sollen nun noch kurz das Verfahren sowie die Vorrichtung zum Herstellen des erfindungsgemäßen Stammblattes 1 erläutert werden.

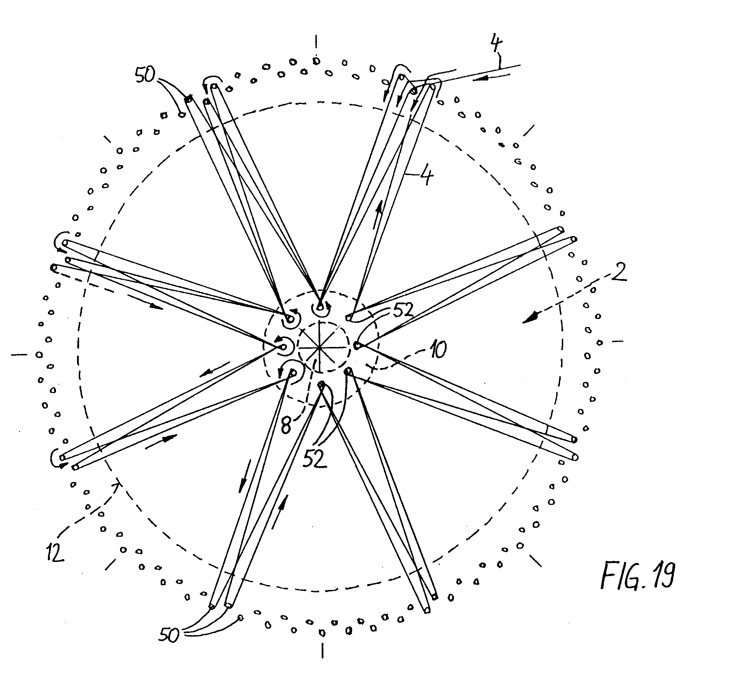

In den Fig. 15 bis 19 ist jeweils mit gestrichelten Linien der Scheibenkörper 2 angedeutet. Diese Form wird mit einem nicht dargestellten Preß- oder Spritzwerkzeug aus dem Kunststoffmaterial 6 hergestellt, wobei vorher die Fasern 4 verlegt werden. Hierzu besitzt die Herstellungsvorrichtung erfindungsgemäß eine Vielzahl von über den Außenumfang des Werkzeugs verteilt angeordneten, äußeren Fixierstiften 50 oder dergleichen Fixierelemente und gegebenenfalls auch im zentrischen Bereich mindestens einen inneren Fixierstift 52 (Fig. 18) oder mehrere umfänglich verteilt angeordnete, innere Fixierstifte 52 (Fig. 19). Um eine über den Umfang möglichst dichte, d.h. flächendeckende, und gleichmäßige Verteilung der Fasern 4 zu erreichen, sollten möglichst viele äußere Fixierstifte 50 vorgesehen sein, die - wie dargestellt - auf mehreren (z.B. zwei) konzentrischen Kreisen liegen können und dabei jeweils in Umfangsrichtung zueinander versetzt angeordnet sind. In den dargestellten Ausführungsbeispielen sind die äußeren Fixierstifte 50 außerhalb der späteren Raumform des Scheibenkörpers 2 angeordnet. Alternativ ist es aber ebenfalls möglich,die äußeren Fixierstifte 50 noch gerade innerhalb, d.h. nahe dem Außenumfang 12 anzuordnen, so daß dann die Fixierstifte 50 zusammen mit den Fasern 4 in das Kunststoffmaterial 6 eingebettet werden. Der einzelne innere Fixierstift 52 gemäß Fig. 18 liegt zweckmäßigerweise genau im Zentrum des Scheibenkörpers 2, d.h. im Bereich der Montageöffnung 8, so daß dieser Fixierstift 52 nicht mit eingebettet wird. Die mehreren inneren Fixierstifte 52 gemäß Fig. 19 liegen im Bereich des Flansches 10, so daß sie mit in das Kunststoffmaterial 6 eingebettet werden. Hierzu alternativ wäre es möglich, die Fixierstifte 52 im Bereich der Montageöffnung 8 anzuordnen, so daß sie dann nicht mit eingebettet werden.

Erfindungsgemäß werden nun zunächst die Fasern 4 durch Umwickeln der Fixierstifte 50 und gegebenenfalls 52 in einer zumindest annähernd radialen Orientierung und in einer über den Umfang gleichmäßigen, schichtartigen Verteilung verlegt. Hierzu gibt es eine Vielzahl von Möglichkeiten, von denen lediglich beispielhaft in den Fig. 15 bis 19 nur einige angedeutet sind, ohne die Erfindung jedoch auf diese Möglichkeiten zu beschränken. Bei allen Möglichkeiten ist es zweckmäßig, zum Verlegen der Fasern 4 Endlosfasern zu verwenden, die in Spulenform aufgewickelt erhältlich sind.

Gemäß Fig. 15 wird die Endlosfaser, ausgehend von einem beliebigen äußeren Fixierstift 50, zum diametral gegenüberliegenden äußeren Fixierstift 50 geführt. Dieser Stift wird umschlungen und die Faser wird dann zu dem dem diametral gegenüberliegenden Stift benachbarten Stift geführt und so weiter. Der Wickelvorgang läßt sich sehr leicht anhand der in Fig. 15 eingezeichneten Pfeile nachvollziehen. Es ist hier erkennbar, daß die Faser stets in der gleichen Richtung um die äußeren Fixierstifte 50 geschlungen wird.

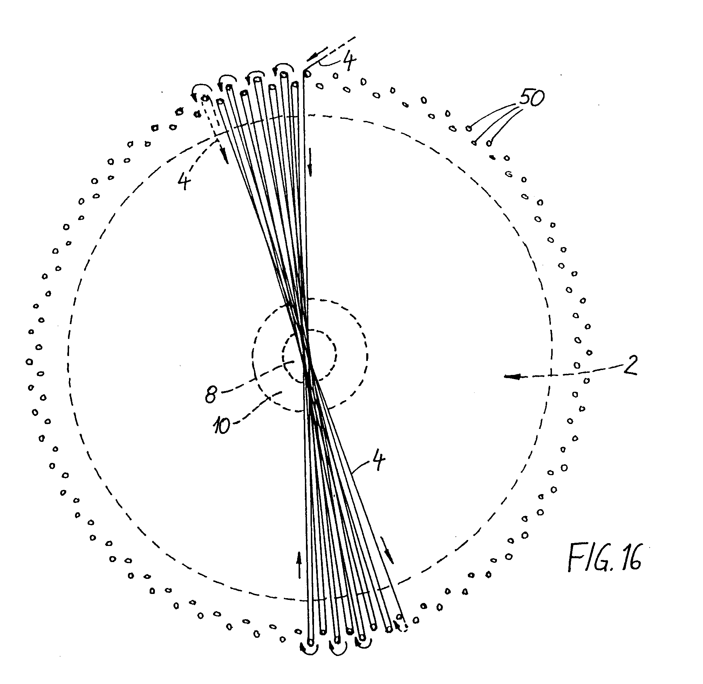

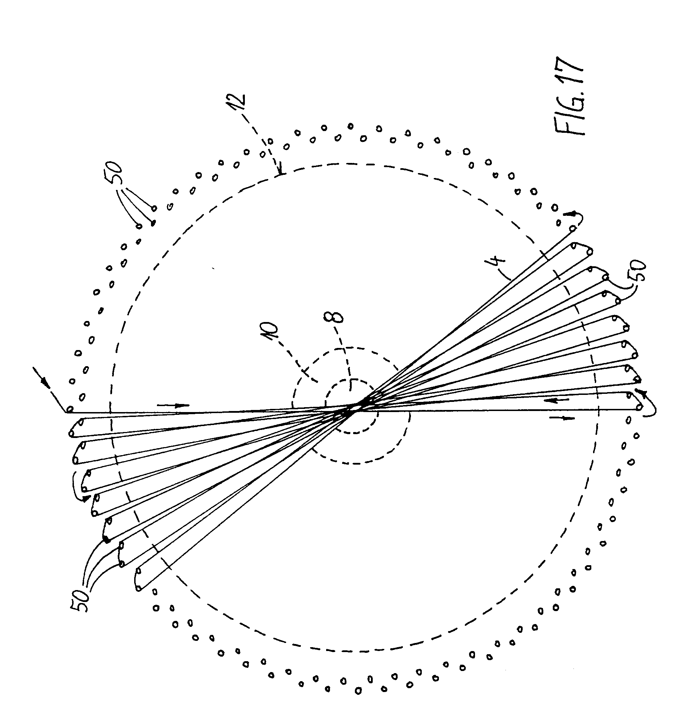

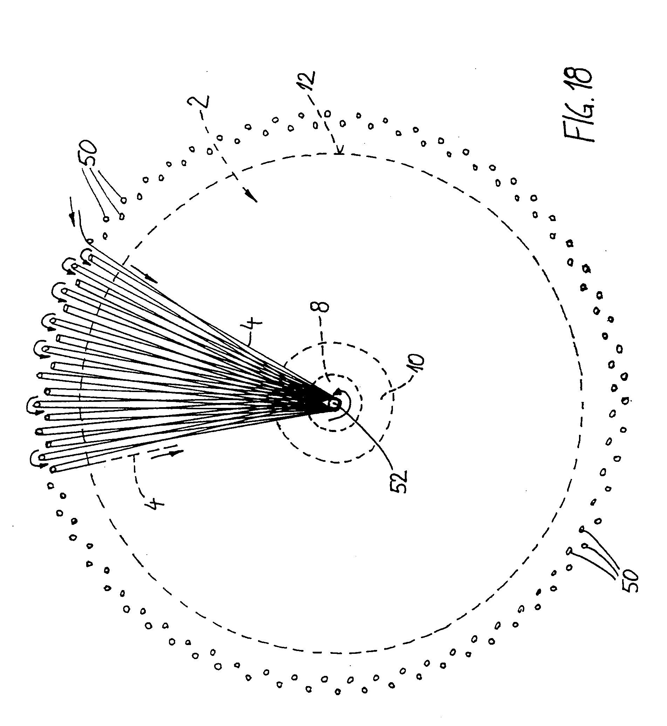

Die demgegenüber in Fig. 16 angedeutete Wickeltechnik unterscheidet sich von derjenigen gemäß Fig. 15 lediglich dadurch, daß die Umschlingung der einander jeweils diametral gegenüberliegenden Fixierstifte 50 jeweils in unterschiedlichen Richtungen erfolgt. Dies bedeutet, daß hier jeweils Umschlingungen in Form einer "8" erfolgen. Auch hier läßt sich der Verlauf der Fasern anhand der eingezeichneten Pfeile leicht nachvollziehen.

In Fig. 17 wird die Faser 4 ebenfalls ausgehend von einem beliebigen äußeren Fixierstift 50 zu dem diametral gegenüberliegenden Fixierstift geführt, von diesem aus jedoch zu seinem unmittelbar benachbarten Fixierstift und von hier aus zu dessen diametral gegenüberliegendem Stift und so weiter. Dabei können analog zu Fig. 15 die Umschlingungen stets in der gleichen Richtung erfolgen, oder aber - wie in Fig. 16 - jeweils in Form einer "8" mit Umschlingungen in unterschiedlichen Richtungen.

Bei der in Fig. 18 veranschaulichten Wickeltechnik wird die Faser stets zwischen den äußeren Fixierstiften 50 und dem einzelnen inneren Fixierstift 52 hin und her gewickelt, wobei außen jeweils schrittweise von einem zu dem nächsten Fixierstift 50 übergegangen wird. Die Umschlingungen können in der gleichen Richtung - wie in Fig. 18 dargestellt - oder aber in unterschiedlichen Richtungen in Form jeweils einer "8" erfolgen.

In Fig. 19 ist eine Wickeltechnik unter Verwendung der äußeren Fixierstifte 50 sowie von mehreren inneren Fixierstiften 52 veranschaulicht. Hierbei ist naturgemäß die Anzahl der inneren Fixierstifte 52 geringer als die Anzahl der äußeren Fixierstifte 50. Daher sind jedem inneren Fixierstift 52 mehrere, in einem Kreissektor angeordnete äußere Fixierstifte 50 zum jeweiligen Umwickeln zugeordnet. Der Verlauf der Faser 4 läßt sich ohne weiteres der Fig. 19 entnehmen.

Bei allen Wickeltechniken werden vorzugsweise mehrere Lagen übereinanderliegend gewickelt. Dabei ist es wesentlich, daß das Verlegen der Fasern mit einer konstanten Zugspannung erfolgt, um dem Stammblatt seine "radial-isotropen" Eigenschaften zu geben. Wie sich insbesondere aus Fig. 20 ergibt, wird zunächst die erste Faser-Schicht 16 (aus mehreren Wickellagen) verlegt. Danach wird auf diese erste Faser-Schicht 16 die Mittenschicht 20 insbesondere als vorgefertigter Füllkörper aufgebracht, und zwar gegebenenfalls zusammen mit dem Segmentträgerring 14. Dann wird die zweite Faser-Schicht 18 auf der Mittenschicht 20 in zu der ersten Schicht 16 analoger Weise verlegt. Diese zweite Schicht ist in Fig. 20 noch nicht dargestellt, d.h. sie müßte in dem gezeigten Verfahrensstadium noch verlegt werden. Schließlich werden alle Schichten gemeinsam mittels des Formwerkzeuges mit dem Kunststoffmaterial umschlossen, d.h. in das Kunststoffmaterial eingebettet, so daß ein materialeinheitlicher Verbundwerkstoff entsteht. Die Querschnittskonturen des fertigen Scheibenkörpers 2 sind in Fig. 20 gestrichelt eingezeichnet. Es ist hierbei wesentlich, daß die Fixierung der Fasern 4 mittels der Fixierstifte 50 und gegebenenfalls 52 auch während des Aushärtens des Kunststoffmaterials noch beibehalten wird, um zu gewährleisten, daß auch nach dem Aushärten die Fasern 4 noch ihre Zugspannung besitzen, die sie während des Wickelvorganges erhalten haben. Nach dem Aushärten des Kunststoffmaterials wird der Rohling aus der Form entnommen, und es erfolgt eine abschließende Bearbeitung, indem im äußeren Umfangsbereich die überstehenden Fasern 4 abgeschnitten werden. Im zentrischen Bereich wird die Montageöffnung 8 hergestellt. In dem Fall, daß im äußeren Umfangsbereich die Fixierstifte 50 mit eingebettet werden, ist es vorteilhaft, den Scheibenkörper 2 zunächst mit einem Übermaß - bezogen auf den Durchmesser - herzustellen und dann den die Stifte 50 enthaltenden Bereich mechanisch zu entfernen. Der einzelne, zentrische Fixierstift gemäß Fig. 11 wird beim Herstellen der Montageöffnung 8 ebenfalls entfernt. Die mehreren inneren Fixierstifte 50 gemäß Fig. 12 könten im Bereich des einstückigen Flansches 10 verbleiben.

Alternativ zu dem bisher beschriebenen Verfahren ist es ebenfalls möglich, die Mittenschicht 20 gleichzeitig mit dem Formvorgang, d.h. gleichzeitig mit dem Spritzen bzw. Gießen des Kunststoffmaterials aus diesem zu bilden. Hierzu werden nach dem Verlegen der ersten Faserschicht 16 auf dieser geeignete Abstandhalter und dann die zweite Faser-Schicht 18 angeordnet. Beim Formvorgang dringt dann das Kunststoffmaterial auch zwischen die Faser-Schichten 16, 18 zur Bildung der Mittenschicht 20 ein. Die Abstandhalter können in der Mittenschicht 20 verbleiben oder aber z.B. durch Ausschmelzen entfernt werden. Hierbei können zur Bildung der oben erwähnten Kanäle 44 vor dem Formvorgang auch der Form der Kanäle entsprechende Füllkörper eingelegt werden, wobei dann diese Füllkörper nach dem Formvorgang zur Bildung der Kanäle aus der Mittenschicht entfernt werden. Hierzu kann entweder für die Füllkörper ein bei Wärmeeinwirkung schmelzendes Material verwendet werden, wobei zum Entfernen die Füllkörper ausgeschmolzen werden. Alternativ hierzu können die Füllkörper z.B. aus einem Drahtmaterial bestehen und vor dem Einlegen mit einem Trennmittel umhüllt werden, wodurch ein Stoffschluß mit dem Kunststoffmaterial vermieden wird. Die Füllkörper können dann auf einfache Weise aus dem Kunststoffmaterial herausgezogen werden, wodurch die Kanäle 44 gebildet werden.

Es ist weiterhin besonders vorteilhaft, wenn abschließend auf das Stammblatt nach dem Formen eine oberflächige Verschleißschutz-Beschichtung auf geeignete Weise aufgebracht wird. Beispielsweise kann diese Beschichtung aufgesprüht werden.

In einer vorteilhaften, nicht dargestellten Weiterbildung der Erfindung, d.h. der erfindungsgemäßen Herstellungsvorrichtung, besitzt diese eine insbesondere programmgesteuerte Verlegeeinrichtung zum automatischen Bewickeln der Fixierstifte mit dem Endlos-Fasermaterial. Diese Verlegeeinrichtung besitzt einen beweglichen Verlegekopf, dessen Bewegungen gemäß dem jeweiligen Wickelschema programmierbar sind.

Die Erfindung ist nicht auf die dargestellten und beschriebenen Ausführungsbeispiele beschränkt, sondern umfaßt auch alle im Sinne der Erfindung gleichwirkenden Ausführungen.

## Patentansprüche

1. Stammblatt (1) für Kreissägeblätter und/oder Trennschleifscheiben, bestehend aus einem kreisförmigen Scheibenkörper (2), der seinerseits zumindest teilweise aus einem mit Fasern (4) verstärkten Kunststoffmaterial (6) besteht, wobei der durchschnittliche Faseranteil im Kunststoffmaterial (6) zumindest 30 bis 70% beträgt,
**dadurch gekennzeichnet,** daß die Fasern (4) - bezogen auf die Kreisform des Scheibenkörpers (2) - in einer wenigstens annähernd radialen Orientierung sowie in einer derart über den Umfang des Scheibenkörpers (2) gleichmäßigen und dichten Verteilung in dem Kunststoffmaterial (6) eingebettet angeordnet sind, daß der Scheibenkörper (2) in allen radialen Richtungen gleiche mechanische Eigenschaften besitzt.

2. Stammblatt nach Anspruch 1,
**dadurch gekennzeichnet,** daß zusätzlich zu den radialen Fasern (4) noch weitere Fasern in Umfangsrichtung oder sekantenartig verlaufend angeordnet sind.

3. Stammblatt nach Anspruch 1 oder 2,
**dadurch gekennzeichnet,** daß das Kunststoffmaterial (6) des Scheibenkörpers (2) einen in radialer Richtung von innen nach außen abnehmenden Faseranteil aufweist, wobei der durchschnittliche Faseranteil 30 bis 80 Vol.-%, insbesondere etwa 60 bis 65 Vol.-% beträgt.

4. Stammblatt nach einem oder mehreren der Ansprüche 1 bis 3,
**dadurch gekennzeichnet,** daß die Fasern (4) stramm, unter einer Zugspannung stehend in dem Kunststoffmaterial (6) eingebettet sind.

5. Stammblatt nach einem oder mehreren der Ansprüche 1 bis 4,
**dadurch gekennzeichnet,** daß die Fasern (4) aus einem hochsteifen Kohlefasermaterial bestehen.

6. Stammblatt nach einem oder mehreren der Ansprüche 1 bis 5,
**dadurch gekennzeichnet,** daß das Kunststoffmaterial (6) ein selbsthärtender Mehrkomponenten-Werkstoff auf der Basis eines niedrig viskosen Kunstharzes ist.

7. Stammblatt nach einem oder mehreren der Ansprüche 1 bis 6,
**dadurch gekennzeichnet,** daß der Scheibenkörper (2) aus zwei äußeren, die Fasern (4) enthaltenden Faser-Schichten (16, 18) und einer dazwischenliegenden, mit dem Kunststoffmaterial (6) zumindest stoffschlüssig verbundenen Mittenschicht (20) besteht, wobei vorzugsweise in jeder Faser-Schicht (16, 18) mehrere Faser-Lagen in zur Seitenebene senkrechter Richtung übereinanderliegend angeordnet sind.

8. Stammblatt nach einem oder mehreren der Ansprüche 1 bis 7,
**dadurch gekennzeichnet,** daß der Scheibenkörper (2) einen sich über dessen Außenumfang (12) mit einem Halteabschnitt (24) radial hinaus erstreckenden und mit einem Verbindungsabschnitt (22) stoff- und/oder formschlüssig mit dem Kunststoffmaterial (6) verbundenen Segmentträgerring (14) aufweist.

9. Stammblatt nach Anspruch 8,
**dadurch gekennzeichnet,** daß der Segmentträgerring (14) von einem Kreisscheibenring gebildet ist, dessen innerer Umfangsbereich den Verbindungsabschnitt (22) bildet, der die Mittenschicht (20) umfänglich umschließend in das Kunststoffmaterial (6) des Scheibenkörpers (2) eingebettet ist, wobei der Verbindungsabschnitt (22) vorzugsweise von dem Kunststoffmaterial (16) durchdrungene Öffnungen (26) aufweist.

10. Stammblatt nach Anspruch 9,
**dadurch gekennzeichnet,** daß der Kreisscheibenring über den Umfang verteilt angeordnete, radiale, jeweils in eine radiale Richtung randoffene Dehnungsschlitze (28) aufweist, wobei vorzugsweise in Umfangsrichtung jeweils abwechselnd ein nach innen und ein nach außen randoffener Dehnungsschlitz (28) einander benachbart angeordnet sind.

11. Stammblatt nach einem oder mehreren der Ansprüche 8 bis 10,
**dadurch gekennzeichnet,** daß der Segmentträgerring (14) in mehrere einzelne kreisbogenförmige Ringabschnitte (43) unterteilt ist, die insbesondere über Formschlußverbindungen (45) miteinander verbunden sind.

12. Stammblatt nach einem oder mehreren der Ansprüche 8 bis 11,
**dadurch gekennzeichnet,** daß der Segmentträgerring (14) über mehrere, umfänglich verteilt angeordnete, speichenartige, durch die Mittenschicht (20) verlaufende Verbinderelemente (46) mit einem zentrischen Fixierkörper (47) verbunden ist.

13. Stammblatt nach Anspruch 12,
**dadurch gekennzeichnet,** daß die Verbinderelemente (46) jeweils über Formschlußverbindungen (45) mit dem Segmentträgerring (14) und dem Fixierkörper (47) verbunden sind.

14. Stammblatt nach einem oder mehreren der Ansprüche 11 bis 13,
**dadurch gekennzeichnet,** daß jeder Ringabschnitt (43) des Segmentträgerringes (14) aus mehreren Ringstücken (49) besteht, die im äußeren Umfangsbereich über schmale Verbindungsstege (51) einstückig miteinander verbunden sind.

15. Stammblatt nach Anspruch 8,
**dadurch gekennzeichnet,** daß der Segmentträgerring (14) vom äußeren Umfangsbereich der als kreisscheibenförmiger Füllkörper ausgebildeten Mittenschicht (20) gebildet ist.

16. Stammblatt nach einem oder mehreren der Ansprüche 8 bis 15,
**dadurch gekennzeichnet,** daß an dem Halteabschnitt (24) des vorzugsweise aus Metall bestehenden Segmentträgerringes (14) umfänglich verteilt angeordnete Schneidsegmenthalterungen (30) befestigt sind.

17. Stammblatt nach Anspruch 16,
**dadurch gekennzeichnet,** daß der äußere Halteabschnitt (24) des Segmentträgerringes (14) eine geringere Dicke als der Scheibenkörper (2) aufweist, wobei die Schneidsegmenthalterungen (30) jeweils einen im wesentlichen U-förmigen Querschnitt mit einem Quersteg (32) und zwei parallelen, den Halteabschnitt (24) des Segmentträgerringes (14) beidseitig übergreifenden Schenkeln (34) aufweisen.

18. Stammblatt nach Anspruch 16 oder 17,
**dadurch gekennzeichnet,** daß sich der Halteabschnitt (24) unmittelbar oder über einen im wesentlichen die gleiche Dicke wie der Scheibenkörper (2) aufweisenden, den Außenumfang (12) des Scheibenkörpers (2) unmittelbar umschließenden Ringabschnitt (36) an den mit dem Kunststoffmaterial (6) verbundenen, insbesondere stoffschlüssig eingebetteten Verbindungsabschnitt (22) anschließt.

19. Stammblatt nach einem oder mehreren der Ansprüche 16 bis 18,
**dadurch gekennzeichnet,** daß die Schneidsegmenthalterungen (30) mit dem Segmentträgerring (14) verklebt und/oder über im Bereich der den Halteabschnitt (24) übergreifenden Schenkel (34) angeordnete Schraub- oder Nietverbindungen gehaltert sind.

20. Stammblatt nach Anspruch 16,
**dadurch gekennzeichnet,** daß der äußere Halteabschnitt (24) des Segmentträgerringes (14) im wesentlichen die gleiche Dicke wie der Scheibenkörper (2) sowie eine äußere, kreisbogenförmig konvex gekrümmte Befestigungsfläche (38) besitzt, wobei die Schneidsegmenthalterungen (30) mit entsprechend konkav gekrümmten Befestigungsflächen (40) auf der Befestigungsfläche (38) des Segmentträgerringes (14) gehaltert, insbesondere aufgeklebt, sind.

21. Stammblatt nach einem oder mehreren der Ansprüche 16 bis 20,
**dadurch gekennzeichnet,** daß die Schneidsegmenthalterungen (30) jeweils eine Schwalbenschwanz-Aufnahme (42) zur formschlüssigen Halterung eines Schneidsegmentes aufweisen.

22. Stammblatt nach einem oder mehreren der Ansprüche 1 bis 21,
**dadurch gekennzeichnet,** daß der Scheibenkörper (2) vom inneren Bereich zum Außenumfang (12) durch den Bereich seiner Mittelebene, insbesondere durch die Mittenschicht (20), verlaufende Kanäle (44) aufweist, die von einem Kühlmedium durchströmbar sind, oder in denen ein Geräusch-Dämpfungsmedium eingeschlossen ist.

23. Stammblatt nach einem oder mehreren der Ansprüche 1 bis 22,
**dadurch gekennzeichnet,** daß der Scheibenkörper (2) in seinem zentrischen Bereich einen Montageflansch (10) und eine zentrische Montageöffnung (8) aufweist.

24. Stammblatt nach Anspruch 23,
**dadurch gekennzeichnet,** daß der Montageflansch (10) aus Kunststoff besteht und als verdickter Ansatz einstückig mit dem Scheibenkörper (2) ausgebildet ist.

25. Stammblatt nach Anspruch 23,
**dadurch gekennzeichnet,** daß der Montageflansch (10) als separates Bauteil lösbar mit dem Scheibenkörper (2) verbunden, insbesondere verschraubt, ist.

26. Stammblatt nach einem oder mehreren der Ansprüche 22 bis 25,
**dadurch gekennzeichnet,** daß die durch den Scheibenkörper (2) verlaufenden Kanäle (44) sich durch den Montageflansch (10) fortsetzen und in mindestens eine zur Einspeisung eines Kühlmediums dienenden Einspeisungsöffnung (56) übergehen.

27. Stammblatt nach einem oder mehreren der Ansprüche 22 bis 26,
**dadurch gekennzeichnet,** daß die Kanäle (44) im äußeren Umfangsbereich des Scheibenkörpers (2) im Bereich von Segmentschlitzen (55) münden.

28. Stammblatt nach einem oder mehreren der Ansprüche 1 bis 27,
**dadurch gekennzeichnet,** daß der Scheibenkörper (2) eine oberflächige Verschleißschutz-Beschichtung aufweist.

29. Verfahren zum Herstellen des Kreissäge-Stammblattes nach einem oder mehreren der Ansprüche 1 bis 28,
**dadurch gekennzeichnet,** daß zunächst Fasern (4) in einer - bezogen auf die Kreisform des Stammblattes (1) - zumindest annähernd radialen Ausrichtung und in einer über den Umfang gleichmäßigen, schichtartigen, dichten Verteilung fixiert verlegt werden, und daß dann die Fasern (4) unter Formgebung in ein Kunststoffmaterial (6) eingebettet werden.

30. Verfahren nach Anspruch 29,
**dadurch gekennzeichnet,** daß zunächst eine erste Schicht (16) von Fasern (4) verlegt wird, daß dann auf diese erste Faserschicht (16) eine Mittenschicht (20), insbesondere ein vorgefertigter Füllkörper, aufgebracht wird, daß dann eine zweite, gleichartige Faserschicht (18) verlegt wird, und daß dann alle Schichten gemeinsam in das Kunststoffmaterial eingebettet werden.

31. Verfahren nach Anspruch 29 oder 30,
**dadurch gekennzeichnet,** daß die Fasern (4) als Endlosmaterial durch Umwickeln von über den Umfang verteilt angeordneten Fixierstiften (50) und gegebenenfalls mindestens eines im zentrischen Bereich angeordneten Fixierstiftes (52) verlegt werden, wobei das Umwickeln unter einer konstanten Zugspannung erfolgt.

32. Verfahren nach einem oder mehreren der Ansprüche 29 bis 31,
**dadurch gekennzeichnet,** daß in jeder Faserschicht (16, 18) mehrere Faser- bzw. Wickel-Lagen übereinanderliegend angeordnet werden.

33. Verfahren nach einem oder mehreren der Ansprüche 29 bis 32,
**dadurch gekennzeichnet,** daß die Schichten (16, 18, 20) durch Formpressen oder Spritzgießen in das Kunststoffmaterial (6) eingebettet werden.

34. Verfahren nach einem oder mehreren der Ansprüche 29 bis 33,
**dadurch gekennzeichnet,** daß während des Einbettens der Fasern (4) und während des Aushärtens des Kunststoffmaterials (6) die Fixierung der Fasern (4) mittels der Fixierstifte (50, 52) beibehalten wird.

35. Verfahren nach einem oder mehreren der Ansprüche 30 bis 34,
**dadurch gekennzeichnet,** daß die Mittenschicht (20) mit etwa radialen Kanälen (44) versehen wird.

36. Verfahren nach einem oder mehreren der Ansprüche 30 bis 35,
**dadurch gekennzeichnet,** daß die Mittenschicht (20) insbesondere gleichzeitig mit dem Einbetten der Faserschichten (16, 18) aus Kunststoff gegossen oder gespritzt wird, wobei vorher den Kanälen (44) in der Form entsprechende Füllkörper eingelegt und die Füllkörper nachher zur Bildung der Kanäle (44) aus der Mittenschicht (20) entfernt werden.

37. Verfahren nach Anspruch 36,
**dadurch gekennzeichnet,** daß für die Füllkörper ein bei Wärmeeinwirkung schmelzendes Material verwendet wird, wobei zum Entfernen der Füllkörper die Mittenschicht bzw. das Stammblatt erwärmt wird und hierdurch die Füllkörper ausgeschmolzen werden.

38. Verfahren nach Anspruch 36,
**dadurch gekennzeichnet,** daß die Füllkörper zum Entfernen aus dem Mittenkörper bzw. dem Stammblatt herausgezogen werden, wobei vorzugsweise die Füllkörper vor dem Einlegen mit einem einen Stoffschluß mit dem Kunststoff verhindernden Trennmittel umhüllt werden.

39. Verfahren nach einem oder mehreren der Ansprüche 29 bis 38,
**dadurch gekennzeichnet,** daß auf das Stammblatt (1) nach dem Formen eine oberflächige Verschleißschutz-Beschichtung aufgebracht wird.

40. Vorrichtung zum Herstellen eines Stammblattes (1) nach einem oder mehreren der Ansprüche 1 bis 28 bzw. zur Durchführung des Verfahrens nach einem oder mehreren der Ansprüche 29 bis 39, bestehend aus einem Kunststoff-Preß- oder Spritzwerkzeug mit einer dem Stammblatt (1) entsprechenden Form,
**gekennzeichnet durch** eine Vielzahl von über den Außenumfang des Werkzeuges verteilt angeordneten, mit Fasern (4) umwickelbaren Fixierstiften (50) wobei die Fixierstiften (50) außerhalb oder innerhalb der späteren Raumform des Scheibenkörpers (2) des Stammblattes (1) angeordnet werden können.

41. Vorrichtung nach Anspruch 40,
**gekennzeichnet durch** mindestens einen zusätzlichen, im zentrischen Bereich angeordneten Fixierstift (52).

42. Vorrichtung nach Anspruch 40 oder 41,
**gekennzeichnet durch** eine insbesondere programmgesteuerte Verlegeeinrichtung zum automatischen Bewickeln der Fixierstifte (50/52) mit einem Endlos-Fasermaterial (4).

## Claims

1. Blade body (1) for circular saw blades and/or abrasive cutting discs, comprising a circular disc body (2), which for its part, at least partly, comprises a plastics material (6) reinforced with fibres (4), in which the average fibre content in the plastics material (6) is at least 30 to 70%, characterised in that the fibres (4) - in relation to the circular shape of disc body (2) - are arranged in an at least approximately radial manner and in such a way that they are embedded with uniform and tight distribution in the plastics material (6) over the periphery of the disc body (2) so that the disc body (2) has the same mechanical properties in all radial directions.

2. Blade body according to Claim 1,
characterised in that in addition to the radial fibres (4) additional fibres are arranged to run in the peripheral direction or like secants.

3. Blade body according to Claim 1 or 2,
characterised in that plastics material (6) of the disc body (2) has a reducing fibre content in the radial direction from the inside to the outside, where the average fibre content is between 30 and 80% by volume, and in particular about 60 to 65% by volume.

4. Blade body according to one or more of Claims 1 to 3,
characterised in that the fibres (4) are tightly embedded in the plastics material (6) under a tensile stress.

5. Blade body according to one or more of Claims 1 to 4,
characterised in that the fibres (4) are made from a carbon fibre material of high rigidity.

6. Blade body according to one or more of Claims 1 to 5,
characterised in that the plastics material (6) is a self-curing multi-component material based on a low viscosity synthetic resin.

7. Blade body according to one or more of Claims 1 to 6,
characterised in that the disc body (2) comprises two outer fibre layers (16, 18), which contain the fibres (4), and an intermediate middle layer (20) that is at least materially bonded with the plastics material (6), where preferably in each fibre layer (16, 18) a plurality of fibre layers are arranged one over the other in a direction perpendicular with respect to the side plane.

8. Blade body according to one or more of Claims 1 to 7,
characterised in that the disc body (2) has a segment carrier ring (14) extending radially outwards over the outer periphery (12) thereof with a retaining section (24), and with a connecting section (22) connected materially and/or form-fittingly to the plastics material (6).

9. Blade body according to Claim 8,
characterised in that the segment carrier ring (14) is formed by a circular disc ring, the inner peripheral region of which forms the connecting section (22) which, peripherally enclosing the middle layer (20), is embedded in the plastics material (6) of the disc body (2), where the Connecting section (22) preferably has openings (26) penetrated by the plastics material (16).

10. Blade body according to Claim 9,
characterised in that the circular disc ring has radial expansion slots (28) open to the edge in each case in a radial direction and arranged distributed over the periphery, in which, in the peripheral direction and in each case alternately, one inward pointing and one outward pointing expansion slot (28), open to the edge, are preferably arranged adjacent to one another.

11. Blade body according to one or more of Claims 8 to 10,
characterised in that segment carrier ring (14) is divided into a plurality of individual arcuate ring sections (43) which are in particular connected to one another by form-fitting connections (45).

12. Blade body according to one or more of Claims 8 to 11,
characterised in that the segment carrier ring (14) is connected to a central fixing body (47) by a plurality of peripherally distributed spoke-like connecting elements (46) which run through the middle layer (20).

13. Blade body according to Claim 12,
characterised in that the connecting elements (46) are in each case connected by form-fitting connections (45) to the segment carrier ring (14) and the fixing body (47).

14. Blade body according to one or more of Claims 11 to 13,
characterised in that each ring section (43) of the segment carrier ring (14) comprises a plurality of ring pieces (49), which are connected to one another as one piece in the outer peripheral region by narrow connecting webs (51).

15. Blade body according to Claim 8,
characterised in that the segment carrier ring (14) is formed by the outer peripheral region of the middle layer (20), which is formed as a disc-shaped filling body.

16. Blade body according to one or more of Claims 8 to 15,
characterised in that peripherally distributed cutting segment holders (30) are fastened on the holding section (24) of segment carrier ring (14), which is preferably made of metal.

17. Blade body according to Claim 16,
characterised in that the external holding section (24) of segment carrier ring (14) has less thickness than the disc body (2), where the cutting segment mountings (30) each have a substantially U-shaped cross-section with a transverse web (32) and two parallel legs (34) overlapping the holding section (24) of the segment carrier ring (14) on both sides.

18. Blade body according to Claim 16 or 17,
characterised in that the holding section (24) is connected directly or through a ring section (36), that is of substantially the same thickness as the disc body (2) and directly encloses the outer periphery (12) of the disc body (2), to the connection section (22), which is connected to, in particular materially embedded in, the plastics material (6).

19. Blade body according to one or more of Claims 16 to 18,
characterised in that the cutting segment mountings (30) are glued to the segment carrier ring (14) and/or are mounted by way of screw or rivet connections arranged in the region of legs (34) overlapping the holding section (24).

20. Blade body according to Claim 16,
characterised in that the external holding section (24) of the segment carrier ring (14) has substantially the same thickness as the disc body (2) as well as an external, arcuately convexly curved fastening surface (38), where the cutting segment mountings (30) are mounted, in particular affixed with adhesive, by correspondingly concavely curved fastening surfaces (40) onto fastening surface (38) of the segment carrier ring (14).

21. Blade body according to one or more of Claims 16 to 20,
characterised in that the cutting segment mountings (30) each have a dovetail-shaped receiver (42) to form-fittingly mount a cutting segment.

22. Blade body according to one or more of Claims 1 to 21,
characterised in that the disc body (2) has channels (44) which run from the inner region to the outer periphery (12) through the region of its centre plane, in particular through the middle layer (20), through which channels (44) a cooling medium is flowable, or in which a noise damping medium is enclosed.

23. Blade body according to one or more of Claims 1 to 22,
characterised in that the disc body (2) has in its central region an assembly flange (10) and a central mounting opening (8).

24. Blade body according to Claim 23,
characterised in that the assembly flange (10) is made of plastics and, as a widened neck, is constructed as a single piece with the disc body (2).

25. Blade body according to Claim 23,
characterised in that the assembly flange (10) is connected, in particular screwed, as a separate part to the disc body (2) in such a way that it can be detached.

26. Blade body according to one or more of Claims 22 to 25,
characterised in that the channels (44) running through the disc body (2) continue through the assembly flange (10) and merge into at least one feed opening (56) serving to supply a cooling medium.

27. Blade body according to one or more of Claims 22 to 26,
characterised in that the channels (44) in the outer peripheral region of disc body (2) come out in the region of segment slots (55).

28. Blade body according to one or more of Claims 1 to 27,
characterised in that the disc body (2) has a surface wear-protection coating.

29. Process for manufacturing the circular saw blade body according to one or more of Claims 1 to 28,
characterised in that initially fibres (4) are laid in a fixed manner in an at least approximately radial alignment - in relation to the circular shape of the blade body (1) - and over the periphery in a uniform, layer-like, dense distribution, and in that the fibres (4) are then embedded with shaping in a plastics material (6).

30. Process according to Claim 29,
characterised in that initially a first layer (16) of fibres (4) is laid, in that then a middle layer (20), in particular a premanufactured filling body, is applied to this first fibre layer (16), in that then a second similar fibre layer (18) is laid, and in that then all layers are together embedded in the plastics material.

31. Process according to Claim 29 or 30,
characterised in that the fibres (4) are laid as continuous material by winding over Fling pins (50) distributed over the periphery and, if necessary, at least one fixing pin (52) in the central region, the winding over being carried out under a constant tensile stress.

32. Process according to one or more of Claims 29 to 31,
characterised in that in each fibre layer (16, 18) a plurality of fibre or winding layers are arranged one on top of the other.

33. Process according to one or more of Claims 29 to 32,
characterised in that the layers (16, 18, 20) are embedded in the plastics material (6) by compression moulding or injection moulding.

34. Process according to one or more of Claims 29 to 33,
characterised in that during the embedding of the fibres (4) and during the curing of the plastics material (6) the fixing of the fibres (4) by means of the fixing pins (50, 52) is maintained.

35. Process according to one or more of Claims 30 to 34,
characterised in that the middle layer (20) is provided with approximately radial channels (44).

36. Process according to one or more of Claims 30 to 35,
characterised in that the middle layer (20) is in particular cast or injected with plastics at the same time as the fibre layers (16, 18) are embedded, previously filling bodies corresponding in shape to channels (44) having been laid in, and subsequently the filling bodies being removed from the middle layer (20) to form channels (44).

37. Process according to Claim 36,
characterised in that a material which melts when heat is applied is used for the filling bodies, where in order to remove the filling bodies the middle layer or the blade body is heated and the filling bodies thereby melt.

38. Process according to Claim 36,
characterised in that for removal from the middle body or the blade body the filling bodies are pulled out, the filling bodies before being laid in preferably being coated with a parting material which prevents a material closure with the plastics.

39. Process according to one or more of Claims 29 to 38,
characterised in that a surface wear-protection coating is applied to the blade body (1) after moulding.

40. Device for manufacturing a blade body (1) according to one or more of Claims 1 to 28 or for carrying out the process according to one or more of Claims 29 to 39, comprising a plastics press or injection moulding tool with a shape corresponding to blade body (1),
characterised by a number of fixing pins (50) distributed over the outer periphery of the mould, which fixing pins (50) can be wound over with fibres (4), where the fixing pins (50) can be arranged outside or inside the subsequent spatial shape of the disc body (2) of the blade body (1).

41. Device according to Claim 40,
characterised by at least one additional fixing pin (52) arranged in the central region.

42. Device according to Claim 40 or 41,
characterised by an in particular program-controlled laying device for automatically winding a continuous fibre material (4) around fixing pins (50/52).

## Revendications

1. Corps de lame (1) pour scie circulaire et/ou meule tronçonneuse, constituée d'un corps de disque (2) circulaire, lequel est au moins partiellement constitué d'un matériau synthétique renforcé de fibres (4), le pourcentage moyen de fibres dans le matériau synthétique (6) étant d'au moins 30 à 70%, caractérisé en ce que les fibres (4), par rapport à la forme circulaire du corps de disque (2), sont incorporés dans le matériau synthétique (6) dans une orientation au moins environ radiale et dans une répartition autour de la circonférence du corps de disque (2) qui est aussi régulière et dense de sorte que le corps de disque (2) comporte les mêmes propriétés mécaniques dans toutes les directions radiales.

2. Corps de lame selon la revendication 1, caractérisé en ce que en plus des fibres radiales (4), encore d'autres fibres sont disposées circonférentiellement ou de manière sécante.

3. Corps de lame selon la revendication 1 ou la revendication 2, caractérisé en ce que le matériau synthétique (6) du corps de lame (2) présente un pourcentage de fibres diminuant en direction radiale de l'intérieur vers l'extérieur, le pourcentage moyen de fibres étant de 30 à 80% en volume, en particulier environ 60 à 65% en volume.

4. Corps de lame selon l'une ou plusieurs des revendications 1 a 3, caractérisé en ce que les fibres (4) sont incorporées dans le matériau synthétique (6) de manière raide et sont soumis à une contrainte de traction.

5. Corps de lame selon l'une ou plusieurs des revendications 1 à 4, caractérisé en ce que les fibres (4) sont constituées d'un matériau de fibres de carbone hautement rigide.

6. Corps de lame selon l'une ou plusieurs des revendications 1 à 5, caractérisé en ce que le matériau synthétique (6) est un matériau à plusieurs composantes auto-durcissant à base de une résine synthétique faiblement visqueuse.

7. Corps de lame selon l'une ou plusieurs des revendications 1 à 6, caractérisé en ce que le corps de disque (2) est constitué de deux couches de fibres externes (16, 18) contenant les fibres (4) et d'une couche intermédiaire (20) disposée entre elles et au moins intimement liée avec le matériau synthétique (6), chaque couche de fibres (16, 18) comportant de préférence plusieurs stratifications de couche disposées l'une sur l'autre dans une direction perpendiculaire au plan latérale.

8. Corps de lame selon l'une ou plusieurs des revendications 1 à 7, caractérisé en ce que le corps de disque (2) présente un anneau porteur de segments (14) s'étendant radialement vers l'extérieur sur sa circonférence extérieure (12) avec une section de support (24) et étant liée intimement et/ou adaptée en forme avec le matériau synthétique (6) par l'intermédiaire d'une section de liaison (22).

9. Corps de lame selon la revendication 8, caractérisé en ce que l'anneau porteur de segments (14) est formé d'un anneau de disque circulaire, dont la zone de circonférence interne forme la section de liaison (22) qui est incorporée dans le matériau synthétique (6) du corps de disque (2) de manière à entourer circonférentiellement la couche intermédiaire (20), la section de liaison (22) présentant de préférence des ouvertures (26) traversées par le matériau synthétique (6).

10. Corps de lame selon la revendication 9, caractérisé en ce que l'anneau de disque circulaire présente des fentes d'extension (28) radiales respectivement ouvertes sur leurs bords dans une direction radiale et réparties sur la circonférence, où, de préférence, une fente d'extension (28) ouverte sur le bord vers l'intérieur et une fente d'extension (28) ouverte sur le bord vers l'extérieur sont disposées au voisinage l'une de l'autre en alternance en direction circonférentielle.

11. Corps de lame selon l'une ou plusieurs des revendications 8 à 10, caractérisé en ce que l'anneau porteur de segments (14) est divisé en plusieurs sections annulaires distinctes (43) en forme d'arc de cercle, qui sont en particulier reliées l'une à l'autre par des liaisons en engagement positif (45).

12. Corps de lame selon l'une ou plusieurs des revendications 8 à 11, caractérisé en ce que l'anneau porteur de segments (14) est lié à un corps de fixation central (47) par l'intermédiaire de plusieurs éléments de liaison (46) répartis sur la circonférence, en forme de rayon, et s'étendant à travers la couche intermédiaire (20).

13. Corps de lame selon la revendications 12, caractérisé en ce que les éléments de liaison (46) sont respectivement reliés à l'anneau porteur de segments (14) et au corps de fixation (47) au moyen de liaison à engagement positif (45).

14. Corps de lame selon l'une ou plusieurs des revendications 11 à 13, caractérisé en ce que chaque section annulaire (43) de l'anneau porteur de segments (14) est constitué de plusieurs parties annulaires (49) qui sont reliées l'une à l'autre en une seule pièce dans la zone circonférentielle extérieure par l'intermédiaire de barrettes de liaison étroites (51).

15. Corps de lame selon la revendication 8, caractérisé en ce que l'anneau porteur de segments (14) est formé par la zone circonférentielle extérieure de la couche intermédiaire (20) réalisée en tant que corps de remplissage sous la forme d'un disque circulaire.

16. Corps de lame selon l'une ou plusieurs des revendications 8 à 15, caractérisé en ce que, sur la section de support (24) de l'anneau porteur de segments (14) constitué de préférence de métal, sont fixées des fixations de segment de coupe (30) réparties sur la circonférence.

17. Corps de lame selon la revendication 16, caractérisé en ce que la section de support (24) extérieure de l'anneau porteur de segments (14) présente une épaisseur inférieure à celle du corps de disque (2), les fixations de segments de coupe (30) présentant respectivement une section sensiblement en forme de U avec une âme transversale (32) et deux branches parallèles (34) recouvrant des deux côtés la section de support (24) de l'anneau de porteur de segments (14).

18. Corps de lame selon la revendication 16 ou la revendication 17, caractérisé en ce que la section de support (24) se fixe directement ou par l'intermédiaire d'une section annulaire (36) présentant environ la même épaisseur que le corps de disque (2) et entourant directement la circonférence extérieure (12) du corps de disque (2), à la section de liaison (22) reliée au matériau synthétique (6) en particulier incorporée de manière intime.

19. Corps de lame selon l'une ou plusieurs des revendications 16 à 18, caractérisé en ce que les fixations de segment de coupe (30) sont collées avec l'anneau porteur de segments (14) et/ou sont fixées par des assemblages par vis ou par rivets disposés dans la zone de section de support (24) recouvrant les branches (34).

20. Corps de lame selon la revendication 16, caractérisé en ce que la section de support (24) externe de l'anneau porteur de segments (14) présente sensiblement la même épaisseur que le corps de disque (2) ainsi qu'une surface de fixation (38) extérieure recourbée de manière convexe en forme d'are de cercle, les fixations de segment de coupe (30) étant fixées, en particulier collées, avec des surfaces de fixation (40) correspondantes recourbées de manière concave sur les surfaces de fixation (38) de l'anneau porteur de segments (14).

21. Corps de lame selon l'une ou plusieurs des revendications 16 à 20, caractérisé en ce que les fixations de segment de coupe (30) présentent respectivement un logement en queue d'arronde (42) pour la fixation adaptée en forme d'un segment de coupe.

22. Corps de lame selon l'une ou plusieurs des revendications 1 à 21, caractérisé en ce que le corps de disque (2) présentent des canaux (44) s'étendant de la zone intérieure vers la circonférence extérieure (12) à travers la zone de son plan médian, en particulier à travers la couche intermédiaire (20), lesdits canaux (44) pouvant être traversés par un milieu de refroidissement ou renfermant un milieu d'amortissement de bruit.

23. Corps de lame selon l'une ou plusieurs des revendications 1 à 22, caractérisé en ce que le corps de disque (2) présente dans sa zone centrale une bride de montage (10) et une ouverture de montage centrale (8).

24. Corps de lame selon la revendication 23, caractérisé en ce que la bride de montage (10) est constituée de matériau synthétique et est réalisée en une seule pièce avec le corps de disque (2) sous la forme d'un rebord épaissi.

25. Corps de lame selon la revendication 23, caractérisé en ce que la bride de montage (10) est reliée, de manière détachable, en particulier vissée avec le corps de disque (2) sous la forme d'un élèment de construction séparée.

26. Corps de lame selon l'une au plusieurs des revendications 22 à 25, caractérisé en ce que les canaux (44) s'étendant à travers le corps de disque (2) se prolongent à travers la bride de montage (10) et débouchent dans au moins une ouverture d'alimentation (56) servant à l'alimentation d'un milieu de refroidissement.

27. Corps de lame selon l'une ou plusieurs des revendications 22 à 26, caractérisé en ce que les canaux (44) débouchent dans la zone circonférentielle externe du corps de disque (2) dans la zone de fente de segment (55).

28. Corps de lame selon l'une au plusieurs des revendications 1 à 27, caractérisé en ce que le corps de disque (2) présente une couche de protection d'usure superficielle.

29. Procédé de fabrication d'un corps de lame pour scie circulaire selon l'une ou plusieurs des revendications 1 à 28, caractérisé en ce que des fibres (4) sont tout d'abord, par rapport à la forme circulaire d'un corps de lame, disposées de manière fixée dans une orientation au moins environ radiale et dans une répartition dense et régulière, sous forme de couche, sur la circonférence, et en ce que les fibres (4) sont ensuite incorporées dans un matériau synthétique (6) par façonnage.

30. Procédé selon la revendication 29, caractérisé en ce qu'une première couche (16) de fibres (4) est tout d'abord disposée, en ce qu'une couche intermédiaire (20), en particulier un corps de remplissage préfabriqué, est ensuite appliqué sur cette première couche de fibres (16), en ce qu'une seconde couche de fibres (18) identique est ensuite disposée, et en ce qu'ensuite toutes les couches sont incorporées ensemble dans le matériau synthétique.

31. Procédé selon la revendication 29 ou la revendication 30, caractérisé en ce que les fibres (4) sont disposées sous la forme d'un matériau continu par enroulement autour de goujons de fixation (50) répartis sur la circonférence, et éventuellement d'au moins un goujon de fixation (52) disposé dans la zone centrale, l'enroulement étant réalisé avec une tension de traction constante.

32. Procédé selon l'une ou plusieurs des revendications 29 a 31, caractérisé en ce que, dans chaque couche de fibres (16, 18), sont disposées plusieurs stratifications de fibres, respectivement d'enroulement, disposées les unes sur les autres.

33. Procédé selon l'une ou plusieurs des revendications 29 à 32, caractérisé en ce que les couches (16, 18, 20) sont incorporées dans le matériau synthétique (6) par moulage par compression ou par moulage par injection.

34. Procédé selon l'une ou plusieurs des revendications 29 à 33, caractérisé en ce que pendant l'incorporation des fibres (4) et pendant le durcissement du matériau (6), la fixation des fibres (4) au moyen des goujons de fixation (50, 52) est maintenue.

35. Procédé selon l'une ou plusieurs des revendications 30 à 34, caractérisé en ce que la couche intermédiaire (20) est munie de canaux (44) environ radiaux.

36. Procédé selon l'une ou plusieurs des revendications 30 à 35, caractérisé en ce que la couche intermédiaire (20) est coulée ou injectée en matériau synthétique en particulier en même temps que l'incorporation des couches de fibres (16, 18), des corps de remplissage correspondant en forme aux cannaux (44) étant insérés avant et les corps de remplissage étant ensuite retirés pour former les canaux (44) de la couche intermédiaire (20).

37. Procédé selon la revendication 36, caractérisé en ce que pour le corps de remplissage est utilisé un matériau fondant avec la chaleur, où, pour retirer les corps de remplissage, la couche intermédiaire, respectivement le corps de lame, est chauffé et ainsi les corps de remplissage sont extraits par la fonte.

38. Procédé selon la revendication 36, caractérisé en ce que les corps de remplissage, pour être extraits, sont retirés du corps intermédiaire respectivement du corps de lame, les corps de remplissage étant de préférence enveloppés avec un matériau de séparation empêchant une liaison intime avec le matériau synthétique avant leur insertion.

39. Procédé selon l'une ou plusieurs des revendications 29 à 38, caractérisé en ce que sur le corps de lame (1) après le formage est disposée une couche de protection d'usure superficielle.

40. Dispositif pour fabriquer un corps de lame (1) selon l'une ou plusieurs des revendications 1 à 28, respectivement pour réaliser le procédé selon l'une ou plusieurs des revendications 29 à 39, constitué d'un outil de compression ou d'injection de matériau synthétique ayant une forme correspondant au corps de lame (1), caractérisé en ce qu'une pluralité de goujons de fixation (50) pouvant être enroulés avec des fibres (4) sont répartis sur la circonférence extérieure de l'outil, les goujons de fixation (50) pouvant être disposés à l'intérieur ou à l'extérieur de l'espace correspondant ultérieurement au corps de disque (2) du corps de lame (1).

41. Dispositif selon la revendication 40, caractérisé par au moins un goujon de fixation (52) supplémentaire disposé dans la zone centrale.

42. Dispositif selon la revendication 40 ou la revendication 41, caractérisé par un arrangement de disposition en particulier commandé par un programme pour un enroulement automatique des goujons de fixation (50, 52) avec un matériau de fibres continu (4).
